# EUROPEAN PATENT APPLICATION

(11) **EP 4 412 265 A1**
(43) Date of publication of application: **07.08.2024**
(21) Application number: 22885454.3
(22) Date of filing: 13.09.2022
(51) Int. Cl.: H04W 4/80

(54) **TRANSMISSION CHANNEL RECONFIGURATION METHOD AND APPARATUS, AND ELECTRONIC DEVICE**

(30) Priority: 26.10.2021 CN 202111250881
(71) Applicant: Huawei Technologies Co., Ltd., Shenzhen, Guangdong 518129 (CN)
(72) Inventor: ZHAO, Yao, Shenzhen, Guangdong 518129 (CN); JIN, Meng, Shenzhen, Guangdong 518129 (CN); ZHU, Xudong, Shenzhen, Guangdong 518129 (CN); ZHANG, Xiaofeng, Shenzhen, Guangdong 518129 (CN)
(74) Representative: Isarpatent
(86) International application number: PCT/CN2022/118500
(87) International publication number: WO 2023/071567

(57) **Abstract**

Embodiments of this application provide a transmission channel reconfiguration method and apparatus, and an electronic device. Both a first electronic device and a second electronic device support a sparklink alliance protocol. A first basic service layer in the first electronic device sends a reconfiguration request to a second basic service layer in the second electronic device in response to determining to reconfigure a first transmission channel, where the reconfiguration request indicates to reconfigure a second transmission channel. After reconfiguring the second transmission channel, the second basic service layer may send a reconfiguration response to the first basic service layer, and the first basic service layer reconfigures the first transmission channel. Embodiments of this application provide a technology for reconfiguring a transmission channel in a sparklink alliance wireless short-range communication technology. The reconfiguration of the transmission channel can improve utilization of the transmission channel.

## Description

This application claims priority to Chinese Patent Application No. 202111250881.9, filed with the China National Intellectual Property Administration on October 26, 2021 and entitled "TRANSMISSION CHANNEL RECONFIGURATION METHOD AND APPARATUS, AND ELECTRONIC DEVICE", which is incorporated herein by reference in its entirety.

### TECHNICAL FIELD

Embodiments of this application relate to communication technologies, and in particular, to a transmission channel reconfiguration method and apparatus, and an electronic device.

### BACKGROUND

Electronic devices may communicate with each other by using a wireless short-range communication technology, to implement information sharing and wireless service transmission. New requirements and evolving new technologies drive wireless short-range communication technologies to continuously develop. To meet requirements of all-industry-oriented Internet scenarios, the sparklink alliance (sparklink alliance) is established and dedicated to promoting innovation of a next-generation wireless short-range communication technology and industry ecosystem, to carry applications in scenarios such as smart automobiles, smart homes, smart terminals, and smart manufacturing and meet ultimate performance requirements.

To support the sparklink alliance wireless short-range communication technology and implement a complete process of a short-range service, reconfiguration of a transmission channel needs to be designed under a new protocol framework. Therefore, how to reconfigure the transmission channel becomes an urgent problem to be resolved.

### SUMMARY

Embodiments of this application provide a transmission channel reconfiguration method and apparatus, and an electronic device, to reconfigure a transmission channel in a sparklink alliance wireless short-range communication technology.

According to a first aspect, an embodiment of this application provides a transmission channel reconfiguration method. An entity for executing the transmission channel reconfiguration method is a first electronic device or a chip in a first electronic device. The following uses an example in which the entity for executing the method is the first electronic device for description. In the method, both the first electronic device and a second electronic device support a sparklink alliance protocol, the first electronic device includes a first basic service layer, the second electronic device includes a second basic service layer, a first transmission channel has been created at the first basic service layer, a second transmission channel has been created at the second basic service layer, and the first transmission channel and the second transmission channel are used to transmit data of a first service. The transmission channel reconfiguration method includes:
the first basic service layer sends a reconfiguration request to the second basic service layer in response to determining to reconfigure the first transmission channel, where the reconfiguration request indicates to reconfigure the second transmission channel; the first basic service layer receives a reconfiguration response from the second basic service layer, where the reconfiguration response indicates that the second basic service layer completes reconfiguration of the second transmission channel; and the first basic service layer reconfigures the first transmission channel.

According to this embodiment of this application, a transmission channel in a sparklink alliance wireless short-range communication technology can be reconfigured. The reconfiguration of the transmission channel can improve utilization of the transmission channel.

In an embodiment, before determining to reconfigure the first transmission channel, the first basic service layer needs to determine whether to reconfigure the first transmission channel. In a possible implementation, the first basic service layer may determine, based on a current actual transmission capability of the first transmission channel, whether to reconfigure the first transmission channel.

This embodiment of this application provides the following transmission channel reconfiguration processes.

First, in a process of transmitting the data of the first service through the first transmission channel, in response to determining to transmit data of a second service, the first basic service layer determines whether to reconfigure the first transmission channel. In other words, when the first electronic device starts a new service, the first basic service layer determines whether to reconfigure the first transmission channel.

In this manner, when the first electronic device starts a new service, a first basic application layer of the first electronic device performs port negotiation with a second basic application layer of the second electronic device, to determine a first port of the first electronic device and a second port of the second electronic device that are used to transmit the data of the second service. The first basic application layer may synchronize a mapping relationship between the first port and the second port to the first basic service layer.

When determining to reconfigure the first transmission channel, the first basic service layer may send the reconfiguration request to the second basic service layer. The reconfiguration request indicates to reconfigure a port to which the second transmission channel is mapped, and the reconfiguration request includes an identifier of the second transmission channel and an identifier of the second port.

In this manner, the second basic service layer may reconfigure the second transmission channel in response to the reconfiguration request. Specifically, the second basic service layer may map the second port to the second transmission channel. After completing reconfiguration of the second transmission channel, the second basic service layer may send the reconfiguration response to the first basic service layer.

In response to receiving the reconfiguration response from the second basic service layer, the first basic service layer may map the first port to the first transmission channel, to reconfigure the first transmission channel. After the first basic service layer reconfigures the first transmission channel, the first basic service layer transmits the data of the first service and the data of the second service through a reconfigured first transmission channel.

Second, when quality of service QoS of the first service changes, the first basic service layer determines whether to reconfigure the first transmission channel.

When the quality of service QoS of the first service changes, the first basic service layer performs QoS negotiation with the second basic service layer, to determine new QoS of the first transmission channel and new QoS of the second transmission channel. When determining to reconfigure the first transmission channel, the first basic service layer may send the reconfiguration request to the second basic service layer, where the reconfiguration request indicates to reconfigure QoS of the second transmission channel, and the reconfiguration request includes an identifier of the second transmission channel and the new QoS of the second transmission channel.

In this manner, the second basic service layer may reconfigure the second transmission channel in response to the reconfiguration request. Specifically, the second basic service layer may set the QoS of the second transmission channel to the new QoS of the second transmission channel. After completing reconfiguration of the second transmission channel, the second basic service layer may send the reconfiguration response to the first basic service layer.

In response to receiving the reconfiguration response from the second basic service layer, the first basic service layer may set QoS of the first transmission channel to the new QoS of the first transmission channel. After the first basic service layer reconfigures the first transmission channel, the first basic service layer transmits, through a reconfigured first transmission channel, the data of the first service whose QoS changes.

In this manner, a case in which a logical channel to which a transmission channel is mapped is reconfigured further exists.

After the first basic service layer performs QoS negotiation with the second basic service layer, the first basic service layer detects whether the access layer of the first electronic device performs link quality XQI reconfiguration. An access layer of the first electronic device and an access layer of the second electronic device each include a first access layer and a second access layer, and the first access layer and the second access layer have different data transmission capabilities.

If the first basic service layer detects that the access layer of the first electronic device needs to perform link quality XQI reconfiguration, the first basic service layer sends a first configuration message to the access layer of the first electronic device. In response to the first configuration message, the access layer of the first electronic device performs XQI negotiation with the access layer of the second electronic device to obtain an XQI negotiation result. After obtaining the XQI negotiation result, the access layer of the first electronic device may send the XQI negotiation result to the first basic service layer.

Third, in a possible implementation, the XQI negotiation result includes a new XQI of a logical channel to which the first transmission channel is mapped. It should be understood that a logical channel to which the second transmission channel is mapped is the same as the logical channel to which the first transmission channel is mapped. In other words, the XQI negotiation result includes the new XQI of the logical channel to which the first transmission channel is mapped, namely, a new XQI of the logical channel to which the second transmission channel is mapped. In other words, after the QoS of the first service changes, the first service whose QoS changes can be transmitted only after an XQI of the logical channel to which the first transmission channel and the second transmission channel are mapped is reconfigured.

In this implementation, after the first basic service layer reconfigures the first transmission channel, the first basic service layer transmits, through the reconfigured first transmission channel and the logical channel that has the new XQI and to which the first transmission channel is mapped, the data of the first service whose QoS changes.

Fourth, in a possible implementation, the XQI negotiation result includes a new first logical channel to which the first transmission channel and the second transmission channel are mapped, the first transmission channel and the second transmission channel are originally mapped to the second logical channel, and the first logical channel is different from the second logical channel. In other words, after the QoS of the first service changes, the first service whose QoS changes can be transmitted only after the logical channel to which the first transmission channel and the second transmission channel are mapped is changed.

In this implementation, the first logical channel and the second logical channel belong to a same access layer. For example, the first logical channel and the second logical channel belong to an access technology of a sparklink basic (sparklink basic, SLB) short-range wireless communication system or an access technology of a sparklink low energy (sparklink low energy, SLE) short-range wireless communication system.

When determining to reconfigure the first transmission channel, the first basic service layer may send the reconfiguration request to the second basic service layer, where the reconfiguration request indicates to reconfigure the logical channel to which the second transmission channel is mapped, and the reconfiguration request includes an identifier of the second transmission channel, an identifier of the to-be-bound first logical channel, and an identifier of the to-be-unbound second logical channel. It may also be understood that the reconfiguration request includes: the identifier of the second transmission channel, the identifier of the first logical channel to which the second transmission channel is newly mapped, and the identifier of the second logical channel from which the second transmission channel is to be unbound.

In this manner, the second basic service layer may reconfigure the second transmission channel in response to the reconfiguration request. Specifically, the second basic service layer may map the first logical channel to the second transmission channel, and unbind the second logical channel to which the second transmission channel is originally mapped. After completing reconfiguration of the second transmission channel, the second basic service layer may send the reconfiguration response to the first basic service layer.

In response to receiving the reconfiguration response from the second basic service layer, the first basic service layer may map the first logical channel to the first transmission channel, and unbind the second logical channel to which the first transmission channel is originally mapped. After the first basic service layer reconfigures the first transmission channel, the first basic service layer transmits, through the reconfigured first transmission channel and the first logical channel, the data of the first service whose QoS changes.

Fifth, in a possible implementation, after the first basic service layer performs QoS negotiation with the second basic service layer, the first basic service layer detects whether to switch an access layer. For example, the first basic service layer may detect, based on the QoS of the first service and a current transmission status of the first basic service layer, whether to switch the access layer.

When the first basic service layer determines to switch from the second access layer to the first access layer, the first basic service layer may send a logical link request to the first access layer of the first electronic device, to request the first access layer to allocate a logical channel to the first transmission channel. The first access layer of the first electronic device negotiates with the first access layer of the second electronic device in response to the logical link request, to allocate a third logical channel at the first access layer to the first transmission channel. In response to establishing a logical link between the first access layers with the first access layer of the second electronic device, the first access layer of the first electronic device may send a logical link configuration complete message to the first basic service layer. It should be understood that the logical channel to which the second transmission channel is mapped is the same as the logical channel to which the first transmission channel is mapped.

For example, the first access layer is SLB or SLE, the second access layer is SLB or SLE, and the first access layer is different from the second access layer.

When determining to reconfigure the first transmission channel, the first basic service layer may send the reconfiguration request to the second basic service layer, where the reconfiguration request indicates to reconfigure the logical channel to which the second transmission channel is mapped, and the reconfiguration request includes an identifier of the second transmission channel, an identifier of the to-be-bound third logical channel (a logical channel at the first access layer), and an identifier of a to-be-unbound logical channel (a logical channel at the second access layer) that is at the second access layer and to which the first transmission channel is originally mapped.

In this manner, the second basic service layer may reconfigure the second transmission channel in response to the reconfiguration request. Specifically, the second basic service layer may map the third logical channel to the second transmission channel, and unbind the logical channel that is at the second access layer and to which the second transmission channel is originally mapped. After completing reconfiguration of the second transmission channel, the second basic service layer may send the reconfiguration response to the first basic service layer.

In response to receiving the reconfiguration response from the second basic service layer, the first basic service layer may map the third logical channel (the logical channel at the first access layer) to the first transmission channel, and unbind the logical channel (the logical channel at the second access layer) that is at the second access layer and to which the first transmission channel is originally mapped.

In an embodiment, that the first basic service layer unbinds the logical channel that is at the second access layer and to which the first transmission channel is originally mapped may be specifically: The first basic service layer sends, to the second access layer of the first electronic device, a request for unbinding the first transmission channel from the logical channel at the second access layer, and the second access layer of the first electronic device negotiates with the second access layer of the second electronic device, to release a logical channel resource that is at the second access layer and that corresponds to the first transmission channel. When successfully releasing the logical channel resource that is at the second access layer and that corresponds to the first transmission channel, the second access layer of the first electronic device may send, to the first basic service layer, a response to unbinding the first transmission channel from the logical channel at the second access layer.

In this embodiment, after the first basic service layer reconfigures the first transmission channel, the first basic service layer transmits, through the reconfigured first transmission channel and the third logical channel, the data of the first service whose QoS changes.

Sixth, in a possible implementation, in response to completion of data transmission of the first service, the first basic service layer determines whether to reconfigure the first transmission channel.

In this embodiment, before transmitting the data of the first service, the first basic service layer may map the first transmission channel to a third port corresponding to the data of the first service. When data transmission of the first service is completed, the first basic service layer detects whether the first transmission channel is mapped to another port in addition to the third port. If the first basic service layer detects that the first transmission channel is not mapped to another port in addition to the third port, the first basic service layer determines that the first transmission channel does not need to be reconfigured, and directly unbinds the third port to which the first transmission channel is mapped. If the first basic service layer detects that the first transmission channel is mapped to another port in addition to the third port, the first basic service layer determines to reconfigure the first transmission channel.

In this implementation, the reconfiguration request indicates to unbind a fourth port to which the second transmission channel is mapped, and there is a mapping relationship between the third port and the fourth port. The second basic service layer may reconfigure the second transmission channel in response to the reconfiguration request. Specifically, the second basic service layer may unbind the fourth port to which the second transmission channel is mapped. After completing reconfiguration of the second transmission channel, the second basic service layer may send the reconfiguration response to the first basic service layer. In response to receiving the reconfiguration response from the second basic service layer, the first basic service layer may unbind the third port to which the first transmission channel is mapped.

As described above, embodiments of this application provide solutions in which the first electronic device and the second electronic device interact with each other to complete transmission channel reconfiguration in various cases, so that transmission channel utilization can be improved.

In an embodiment, the reconfiguration response described in the foregoing embodiments is a second reconfiguration response, and the second reconfiguration response includes an identifier of the first transmission channel and a reconfiguration result of the second transmission channel. After the first basic service layer sends the reconfiguration request to the second basic service layer, the second basic service layer may determine, based on a transmission capability of the second transmission channel, whether to reconfigure the second transmission channel.

In response to determining to reconfigure the second transmission channel and completing reconfiguration of the second transmission channel, the second basic service layer may send a reconfiguration response to the first basic service layer. In a possible implementation, in response to not reconfiguring the second transmission channel, the second basic service layer may send a first reconfiguration response to the first basic service layer, where the first reconfiguration response indicates that the second basic service layer does not accept reconfiguration of the second transmission channel. In this way, in response to receiving the first reconfiguration response, the first basic service layer may establish a new transmission channel or transmit the data of the service in another manner.

In a possible implementation, the first basic service layer includes a first QoS management module and a first connection management module. Before the first basic service layer determines whether to reconfigure the first transmission channel, the method further includes: The first QoS management module sends information to the first connection management module, where the information indicates to apply a transmission channel for the second service, or the information indicates that the quality of service QoS of the first service changes. In this way, in response to receiving the information, the first connection management module may determine whether to reconfigure the first transmission channel. For other functions of the first QoS management module and the first connection management module, refer to the following descriptions in the third aspect and the fourth aspect.

According to a second aspect, an embodiment of this application provides a transmission channel reconfiguration method. An entity for executing the transmission channel reconfiguration method is a second electronic device or a chip in a second electronic device. An example in which the entity for executing the method is the second electronic device is used for description in the following embodiments. In the method, both the second electronic device and a first electronic device support a sparklink alliance protocol, the first electronic device includes a first basic service layer, the second electronic device includes a second basic service layer, a first transmission channel has been created at the first basic service layer, a second transmission channel has been created at the second basic service layer, and the first transmission channel and the second transmission channel are used to transmit data of a first service. The transmission channel reconfiguration method includes:
the second basic service layer receives a reconfiguration request from the first basic service layer, where the reconfiguration request indicates to reconfigure the second transmission channel; if determining to reconfigure the second transmission channel, the second basic service layer reconfigures the second transmission channel based on the reconfiguration request; and the second basic service layer sends a reconfiguration response to the first basic service layer, where the reconfiguration response indicates that the second basic service layer completes reconfiguration of the second transmission channel.

In a possible implementation, before the second basic service layer determines to reconfigure the second transmission channel, the method further includes: The second basic service layer determines whether to reconfigure the second transmission channel.

In a possible implementation, the first electronic device includes a first basic application layer, and the second electronic device includes a second basic application layer; and before the second basic service layer receives the reconfiguration request from the first basic service layer, the method further includes: The second basic application layer performs port negotiation with the first basic application layer, to determine a first port of the first electronic device and a second port of the second electronic device that are used to transmit data of a second service.

In a possible implementation, the reconfiguration request indicates to reconfigure a port to which the second transmission channel is mapped, and the reconfiguration request includes an identifier of the second transmission channel and an identifier of the second port.

In a possible implementation, the reconfiguring the second transmission channel includes: The second basic service layer maps the second port to the second transmission channel.

In a possible implementation, after the second transmission channel is reconfigured, the method further includes: The second basic service layer transmits the data of the first service and the data of the second service through a reconfigured second transmission channel.

In a possible implementation, before the second basic service layer receives the reconfiguration request from the first basic service layer, the method further includes: The second basic service layer performs quality of service QoS negotiation with the first basic service layer, to determine new QoS of the first transmission channel and new QoS of the second transmission channel.

In a possible implementation, the reconfiguration request indicates to reconfigure QoS of the second transmission channel, and the reconfiguration request includes an identifier of the second transmission channel and the new QoS of the second transmission channel.

In a possible implementation, the reconfiguring the second transmission channel includes: The second basic service layer sets the QoS of the second transmission channel to the new QoS of the second transmission channel.

In a possible implementation, after the second transmission channel is reconfigured, the method further includes: The second basic service layer transmits, through a reconfigured second transmission channel, the data of the first service whose QoS changes.

In a possible implementation, the first electronic device and the second electronic device each include an access layer; and after the second basic service layer performs quality of service QoS negotiation with the first basic service layer, the method further includes: The access layer of the second electronic device performs link quality XQI negotiation with the access layer of the first electronic device to obtain an XQI negotiation result.

In a possible implementation, a logical channel to which the first transmission channel is mapped is the same as a logical channel to which the second transmission channel is mapped, and the XQI negotiation result includes a new XQI of the logical channel to which the second transmission channel is mapped.

In a possible implementation, after the second transmission channel is reconfigured, the method further includes: The second basic service layer transmits, through the reconfigured second transmission channel and the logical channel that has the new XQI and to which the second transmission channel is mapped, the data of the first service whose QoS changes.

In a possible implementation, a logical channel to which the second transmission channel is mapped is the same as a logical channel to which the first transmission channel is mapped, the XQI negotiation result includes a new first logical channel to which the second transmission channel is mapped, the second transmission channel is originally mapped to a second logical channel, and the first logical channel is different from the second logical channel.

In a possible implementation, the access layer of the first electronic device and the access layer of the second electronic device each include a first access layer and a second access layer, the first access layer and the second access layer have different data transmission capabilities, and the first logical channel and the second logical channel belong to a same access layer.

In a possible implementation, the reconfiguration request indicates to reconfigure the logical channel to which the second transmission channel is mapped, and the reconfiguration request includes an identifier of the second transmission channel, an identifier of the to-be-bound first logical channel, and an identifier of the to-be-unbound second logical channel.

In a possible implementation, the reconfiguring the second transmission channel includes: The second basic service layer maps the first logical channel to the second transmission channel, and unbinds the second logical channel to which the second transmission channel is originally mapped.

In a possible implementation, after the second transmission channel is reconfigured, the method further includes: The second basic service layer transmits, through a reconfigured second transmission channel and the first logical channel, the data of the first service whose QoS changes.

In a possible implementation, an access layer of the first electronic device and an access layer of the second electronic device each include a first access layer and a second access layer, and the first access layer and the second access layer have different data transmission capabilities.

After the second basic service layer performs quality of service QoS negotiation with the first basic service layer, the method further includes: When the first basic service layer determines to switch from the second access layer to the first access layer, the first access layer of the second electronic device negotiates with the first access layer of the first electronic device, to allocate a third logical channel at the first access layer to the first transmission channel.

In a possible implementation, a logical channel to which the second transmission channel is mapped is the same as a logical channel to which the first transmission channel is mapped, the reconfiguration request indicates to reconfigure the logical channel to which the second transmission channel is mapped, and the reconfiguration request includes an identifier of the second transmission channel, an identifier of the to-be-bound third logical channel, and an identifier of a to-be-unbound logical channel that is at the second access layer and to which the second transmission channel is originally mapped. The reconfiguring the second transmission channel includes: The second basic service layer maps the third logical channel to the second transmission channel, and unbinds the logical channel that is at the second access layer and to which the second transmission channel is originally mapped.

In a possible implementation, the unbinding the logical channel that is at the second access layer and to which the second transmission channel is originally mapped includes: The second access layer in the second electronic device negotiates with the second access layer in the first electronic device, to release a logical channel resource that is at the second access layer and that corresponds to the second transmission channel.

In a possible implementation, the reconfiguration request indicates to unbind a fourth port to which the second transmission channel is mapped.

In a possible implementation, the reconfiguring the second transmission channel includes: The second basic service layer unbinds the fourth port to which the second transmission channel is mapped.

In a possible implementation, the reconfiguration response is a second reconfiguration response, and the second reconfiguration response includes an identifier of the first transmission channel and a reconfiguration result of the second transmission channel.

In a possible implementation, the method further includes: if determining not to reconfigure the second transmission channel, the second basic service layer sends a first reconfiguration response to the first basic service layer, where the first reconfiguration response indicates that the second basic service layer does not accept reconfiguration of the second transmission channel.

According to a third aspect, an embodiment of this application provides a transmission channel reconfiguration apparatus, where both a first electronic device and a second electronic device support a sparklink alliance protocol, the first electronic device has created a first transmission channel, the second electronic device has created a second transmission channel, and the first transmission channel and the second transmission channel are used to transmit data of a first service. The transmission channel reconfiguration apparatus includes:
a first connection management module, configured to: send a reconfiguration request to a second connection management module in the second electronic device in response to determining to reconfigure the first transmission channel, receive a reconfiguration response from the second connection management module, and reconfigure the first transmission channel. The reconfiguration request indicates to reconfigure the second transmission channel, and the reconfiguration response indicates that the second connection management module completes reconfiguration of the second transmission channel.

In a possible implementation, the first connection management module is configured to determine whether to reconfigure the first transmission channel.

In a possible implementation, the first connection management module is specifically configured to: in a process of transmitting the data of the first service through the first transmission channel, in response to determining to transmit the data of the second service, determine whether to reconfigure the first transmission channel.

In a possible implementation, the first electronic device includes a first basic application layer, and the second electronic device includes a second basic application layer. The first basic application layer is configured to perform port negotiation with the second basic application layer, to determine a first port of the first electronic device and a second port of the second electronic device that are used to transmit the data of the second service.

In a possible implementation, the reconfiguration request indicates to reconfigure a port to which the second transmission channel is mapped, and the reconfiguration request includes an identifier of the second transmission channel and an identifier of the second port.

In a possible implementation, the first connection management module is specifically configured to map the first port to the first transmission channel, to reconfigure the first transmission channel.

In a possible implementation, the first connection management module is further configured to transmit the data of the first service and the data of the second service through a reconfigured first transmission channel.

In a possible implementation, the first connection management module is specifically configured to: in response to a change of quality of service QoS of the first service, determine whether to reconfigure the first transmission channel.

In a possible implementation, a first QoS management module is configured to perform QoS negotiation with a second QoS management module at the second basic service layer, to determine new QoS of the first transmission channel and new QoS of the second transmission channel.

In a possible implementation, the reconfiguration request indicates to reconfigure QoS of the second transmission channel, and the reconfiguration request includes an identifier of the second transmission channel and the new QoS of the second transmission channel.

In a possible implementation, the first connection management module is specifically configured to set QoS of the first transmission channel to the new QoS of the first transmission channel, to reconfigure the first transmission channel.

In a possible implementation, the first connection management module is further configured to transmit, through a reconfigured first transmission channel, the data of the first service whose QoS changes.

In a possible implementation, the first electronic device and the second electronic device each include an access layer.

The first connection management module is further configured to detect whether the access layer of the first electronic device performs link quality XQI reconfiguration. If the access layer of the first electronic device performs link quality XQI reconfiguration, the first connection management module sends a first configuration message to the access layer of the first electronic device.

The access layer of the first electronic device is configured to: in response to the first configuration message, perform XQI negotiation with the access layer of the second electronic device to obtain an XQI negotiation result. The access layer of the first electronic device sends the XQI negotiation result to the first connection management module.

In a possible implementation, a logical channel to which the second transmission channel is mapped is the same as a logical channel to which the first transmission channel is mapped, and the XQI negotiation result includes a new XQI of the logical channel to which the first transmission channel is mapped.

In a possible implementation, the first connection management module is further configured to transmit, through the reconfigured first transmission channel and the logical channel that has the new XQI and to which the first transmission channel is mapped, the data of the first service whose QoS changes.

In a possible implementation, a logical channel to which the second transmission channel is mapped is the same as a logical channel to which the first transmission channel is mapped, the XQI negotiation result includes a new first logical channel to which the first transmission channel is mapped, the first transmission channel is originally mapped to a second logical channel, and the first logical channel is different from the second logical channel.

In a possible implementation, the access layer of the first electronic device and the access layer of the second electronic device each include a first access layer and a second access layer, the first access layer and the second access layer have different data transmission capabilities, and the first logical channel and the second logical channel belong to a same access layer.

In a possible implementation, the reconfiguration request indicates to reconfigure the logical channel to which the second transmission channel is mapped, and the reconfiguration request includes an identifier of the second transmission channel, an identifier of the to-be-bound first logical channel, and an identifier of the to-be-unbound second logical channel.

In a possible implementation, the first connection management module is specifically configured to: map the first logical channel to the first transmission channel, and unbind the second logical channel to which the first transmission channel is originally mapped.

In a possible implementation, the first connection management module is further configured to transmit, through the reconfigured first transmission channel and the first logical channel, the data of the first service whose QoS changes.

In a possible implementation, an access layer of the first electronic device and an access layer of the second electronic device each include a first access layer and a second access layer, and the first access layer and the second access layer have different data transmission capabilities. The first connection management module is further configured to detect whether to switch an access layer.

In a possible implementation, when the first connection management module determines to switch from the second access layer to the first access layer, the first connection management module is further configured to send a logical link request to the first access layer of the first electronic device.

The first access layer of the first electronic device is further configured to: negotiate with the first access layer of the second electronic device in response to the logical link request, allocate a third logical channel at the first access layer to the first transmission channel, and send a logical link configuration complete message to the first connection management module.

In a possible implementation, a logical channel to which the second transmission channel is mapped is the same as a logical channel to which the first transmission channel is mapped, the reconfiguration request indicates to reconfigure the logical channel to which the second transmission channel is mapped, and the reconfiguration request includes an identifier of the second transmission channel, an identifier of the to-be-bound third logical channel, and an identifier of a to-be-unbound logical channel that is at the second access layer and to which the second transmission channel is originally mapped.

The first connection management module is specifically configured to map: the third logical channel to the first transmission channel, and unbind a logical channel that is at the second access layer and to which the first transmission channel is originally mapped.

In a possible implementation, the first connection management module is specifically configured to send, to the second access layer of the first electronic device, a request for unbinding the first transmission channel from the logical channel at the second access layer.

The second access layer of the first electronic device is further configured to: negotiate with the second access layer of the second electronic device, to release a logical channel resource that is at the second access layer and that corresponds to the first transmission channel, and send, to the first connection management module, a response to unbinding the first transmission channel from the logical channel at the second access layer.

In a possible implementation, the first connection management module is specifically configured to: in response to completion of data transmission of the first service, determine whether to reconfigure the first transmission channel.

In a possible implementation, the first connection management module is specifically configured to: detect whether the first transmission channel is mapped to another port in addition to a third port, where the third port is used to transmit the data of the first service; and if the first transmission channel is not mapped to another port in addition to the third port, unbind the third port to which the first transmission channel is mapped; or if the first transmission channel is mapped to another port in addition to the third port, determine to reconfigure the first transmission channel.

In a possible implementation, the reconfiguration request indicates to unbind a fourth port to which the second transmission channel is mapped, and there is a mapping relationship between the third port and the fourth port.

In a possible implementation, the first connection management module is further configured to unbind the third port to which the first transmission channel is mapped.

In a possible implementation, the reconfiguration response is a second reconfiguration response, and the second reconfiguration response includes an identifier of the first transmission channel and a reconfiguration result of the second transmission channel.

In a possible implementation, the first connection management module is further configured to receive a first reconfiguration response from the second connection management module, where the first reconfiguration response indicates that the second connection management module does not accept reconfiguration of the second transmission channel.

In a possible implementation, the first QoS management module is further configured to send information to the first connection management module, where the information indicates to apply a transmission channel for the second service, or the information indicates that the quality of service QoS of the first service changes.

According to a fourth aspect, an embodiment of this application provides a transmission channel reconfiguration apparatus, where both a first electronic device and a second electronic device support a sparklink alliance protocol, the first electronic device has created a first transmission channel, the second electronic device has created a second transmission channel, and the first transmission channel and the second transmission channel are used to transmit data of a first service. The transmission channel reconfiguration apparatus includes:
a second connection management module, configured to: receive a reconfiguration request from a first connection management module in the first electronic device; if determining to reconfigure the second transmission channel, reconfigure the second transmission channel based on the reconfiguration request; and send a reconfiguration response to the first connection management module. The reconfiguration request indicates to reconfigure the second transmission channel, and the reconfiguration response indicates that the second connection management module completes reconfiguration of the second transmission channel.

In a possible implementation, the second connection management module is further configured to determine whether to reconfigure the second transmission channel.

In a possible implementation, the first electronic device includes a first basic application layer, and the second electronic device includes a second basic application layer. The second basic application layer is configured to perform port negotiation with the first basic application layer, to determine a first port of the first electronic device and a second port of the second electronic device that are used to transmit data of a second service.

In a possible implementation, the reconfiguration request indicates to reconfigure a port to which the second transmission channel is mapped, and the reconfiguration request includes an identifier of the second transmission channel and an identifier of the second port.

In a possible implementation, the second connection management module is specifically configured to map the second port to the second transmission channel.

In a possible implementation, the second connection management module is further configured to transmit the data of the first service and the data of the second service through a reconfigured second transmission channel.

In a possible implementation, a second QoS management module is configured to perform quality of service QoS negotiation with a first QoS management module of the first basic service layer, to determine new QoS of the first transmission channel and new QoS of the second transmission channel.

In a possible implementation, the reconfiguration request indicates to reconfigure QoS of the second transmission channel, and the reconfiguration request includes an identifier of the second transmission channel and the new QoS of the second transmission channel.

In a possible implementation, the second connection management module is specifically configured to set QoS of the second transmission channel to the new QoS of the second transmission channel.

In a possible implementation, the second connection management module is further configured to transmit, through a reconfigured second transmission channel, the data of the first service whose QoS changes.

In a possible implementation, the first electronic device and the second electronic device each include an access layer.

The access layer of the second electronic device is configured to perform link quality XQI negotiation with the access layer of the first electronic device to obtain an XQI negotiation result.

In a possible implementation, a logical channel to which the first transmission channel is mapped is the same as a logical channel to which the second transmission channel is mapped, and the XQI negotiation result includes a new XQI of the logical channel to which the second transmission channel is mapped.

In a possible implementation, the second connection management module is specifically configured to transmit, through the reconfigured second transmission channel and the logical channel that has the new XQI and to which the second transmission channel is mapped, the data of the first service whose QoS changes.

In a possible implementation, a logical channel to which the second transmission channel is mapped is the same as a logical channel to which the first transmission channel is mapped, the XQI negotiation result includes a new first logical channel to which the second transmission channel is mapped, the second transmission channel is originally mapped to a second logical channel, and the first logical channel is different from the second logical channel.

In a possible implementation, the access layer of the first electronic device and the access layer of the second electronic device each include a first access layer and a second access layer, the first access layer and the second access layer have different data transmission capabilities, and the first logical channel and the second logical channel belong to a same access layer.

In a possible implementation, the reconfiguration request indicates to reconfigure the logical channel to which the second transmission channel is mapped, and the reconfiguration request includes an identifier of the second transmission channel, an identifier of the to-be-bound first logical channel, and an identifier of the to-be-unbound second logical channel.

In a possible implementation, the second connection management module is specifically configured to: map the first logical channel to the second transmission channel, and unbind the second logical channel to which the second transmission channel is originally mapped.

In a possible implementation, the second connection management module is further configured to transmit, through the reconfigured second transmission channel and the second logical channel, the data of the first service whose QoS changes.

In a possible implementation, an access layer of the first electronic device and an access layer of the second electronic device each include a first access layer and a second access layer, and the first access layer and the second access layer have different data transmission capabilities. When the first connection management module determines to switch from the second access layer to the first access layer, the first access layer of the second electronic device negotiates with the first access layer of the first electronic device, to allocate a third logical channel at the first access layer to the first transmission channel.

In a possible implementation, a logical channel to which the second transmission channel is mapped is the same as a logical channel to which the first transmission channel is mapped, the reconfiguration request indicates to reconfigure the logical channel to which the second transmission channel is mapped, and the reconfiguration request includes an identifier of the second transmission channel, an identifier of the to-be-bound third logical channel, and an identifier of a to-be-unbound logical channel that is at the second access layer and to which the second transmission channel is mapped.

The first connection management module is specifically configured to: map the third logical channel to the second transmission channel, and unbind a logical channel that is at the second access layer and to which the second transmission channel is originally mapped.

In a possible implementation, the second access layer in the second electronic device is configured to negotiate with the second access layer in the first electronic device, to release a logical channel resource that is at the second access layer and that corresponds to the second transmission channel.

In a possible implementation, the reconfiguration request indicates to unbind a fourth port to which the second transmission channel is mapped.

In a possible implementation, the second connection management module is specifically configured to unbind the fourth port to which the second transmission channel is mapped.

In a possible implementation, the reconfiguration response is a second reconfiguration response, and the second reconfiguration response includes an identifier of the first transmission channel and a reconfiguration result of the second transmission channel.

In a possible implementation, the second connection management module is further configured to: if determining not to reconfigure the second transmission channel, send a first reconfiguration response to the first connection management module at the first basic service layer, where the first reconfiguration response indicates that the second connection management module does not accept reconfiguration of the second transmission channel.

According to a fifth aspect, an embodiment of this application provides an electronic device. The electronic device may include a processor and a memory. The memory is configured to store computer-executable program code, where the program code includes instructions; and when the processor executes the instructions, the instructions enable the electronic device to perform the method according to the first aspect or the second aspect.

According to a sixth aspect, an embodiment of this application provides an electronic device. The electronic device may be the first electronic device or the second electronic device. The electronic device may include a unit, a module, or a circuit configured to perform the method provided in the first aspect, and the electronic device may include a unit, a module, or a circuit configured to perform the method provided in the second aspect.

According to a seventh aspect, an embodiment of this application provides a computer program product including instructions. When the computer program product runs on a computer, the computer is enabled to perform the method according to the first aspect or the second aspect.

According to an eighth aspect, an embodiment of this application provides a computer-readable storage medium. The computer-readable storage medium stores instructions. When the instructions are run on a computer, the computer is enabled to perform the method according to the first aspect or the second aspect.

For beneficial effects of the possible implementations of the second aspect to the eighth aspect, refer to the beneficial effects brought by the first aspect. Details are not described herein again.

### BRIEF DESCRIPTION OF DRAWINGS

FIG. 1 is a diagram of a communication system to which an embodiment of this application is applicable;
FIG. 2 is a diagram of a protocol framework according to an embodiment of this application;

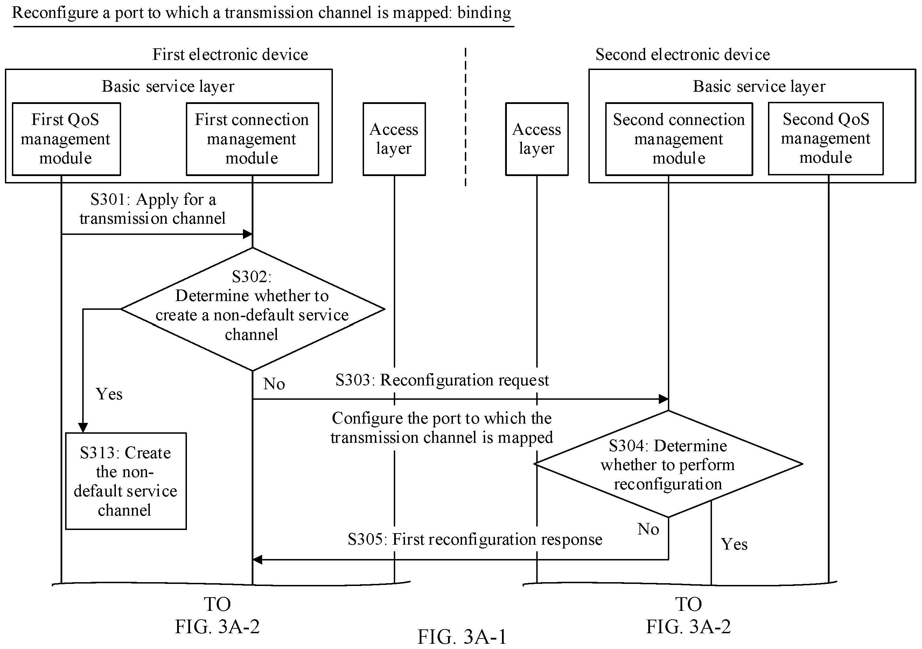

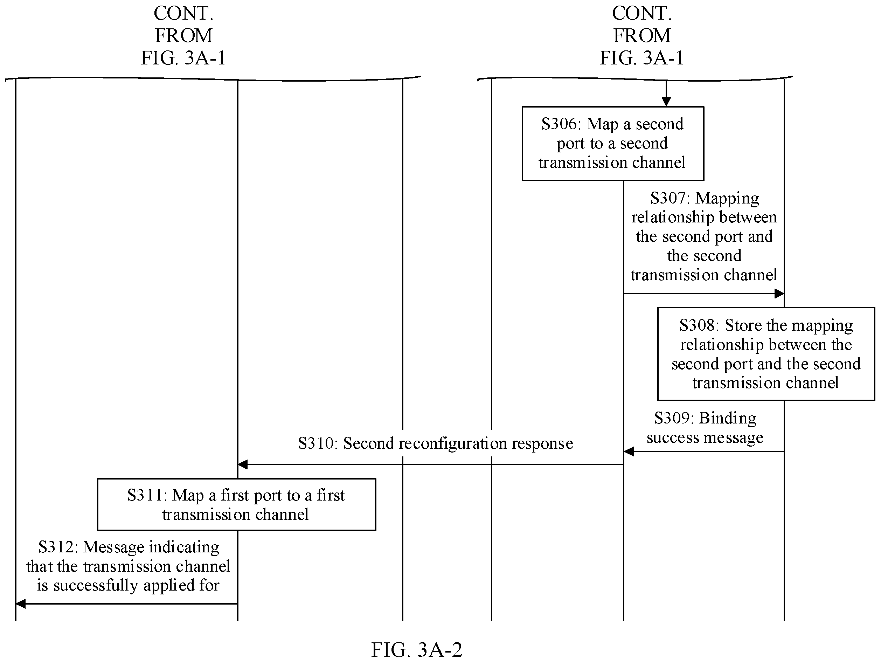

FIG. 3A-1 and FIG. 3A-2 are a schematic flowchart of an embodiment of a transmission channel reconfiguration method according to an embodiment of this application;

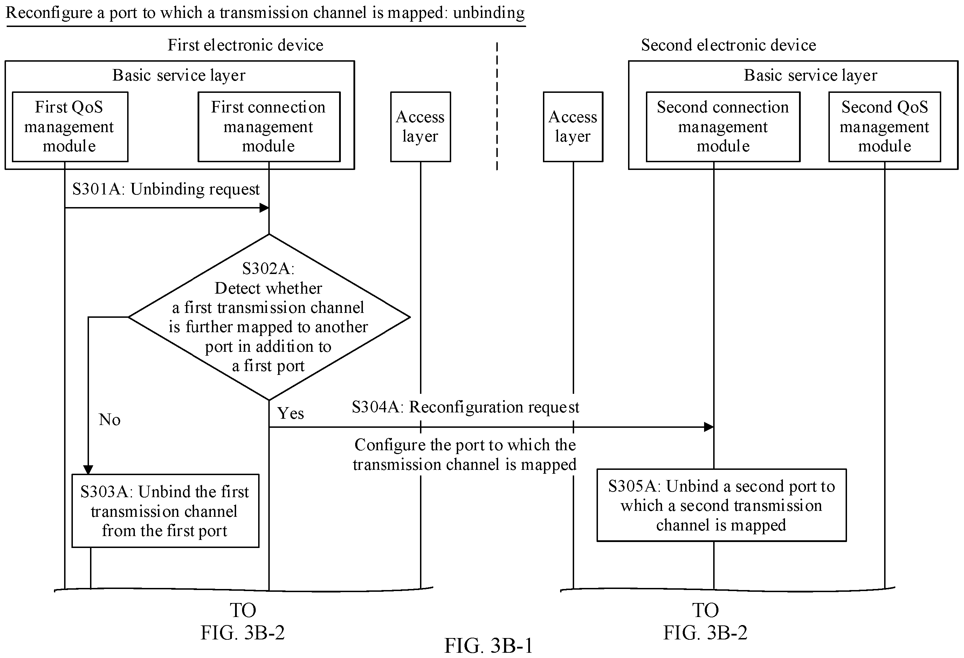

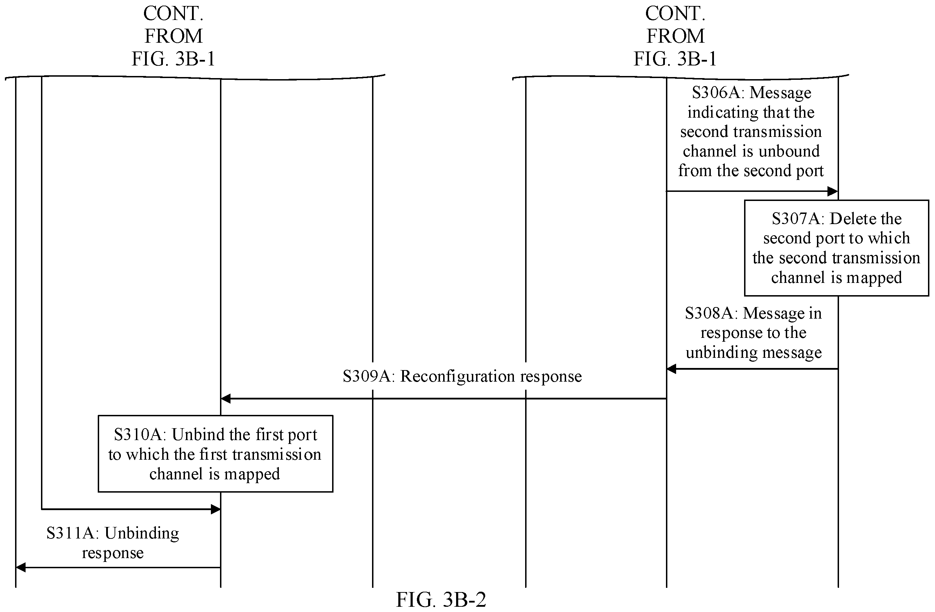

FIG. 3B-1 and FIG. 3B-2 are a schematic flowchart of another embodiment of a transmission channel reconfiguration method according to an embodiment of this application;

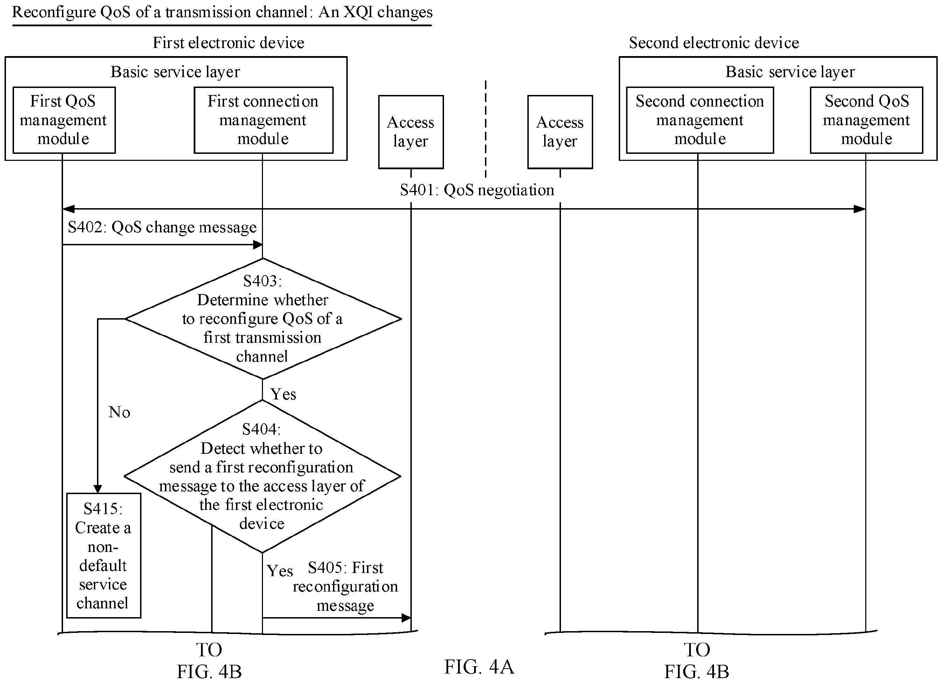

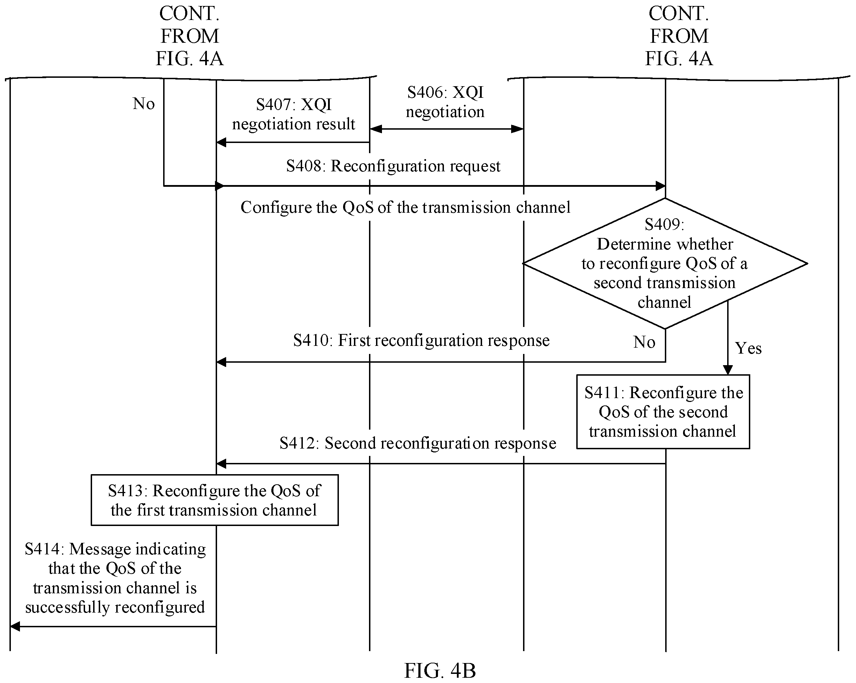

FIG. 4A and FIG. 4B are a schematic flowchart of another embodiment of a transmission channel reconfiguration method according to an embodiment of this application;

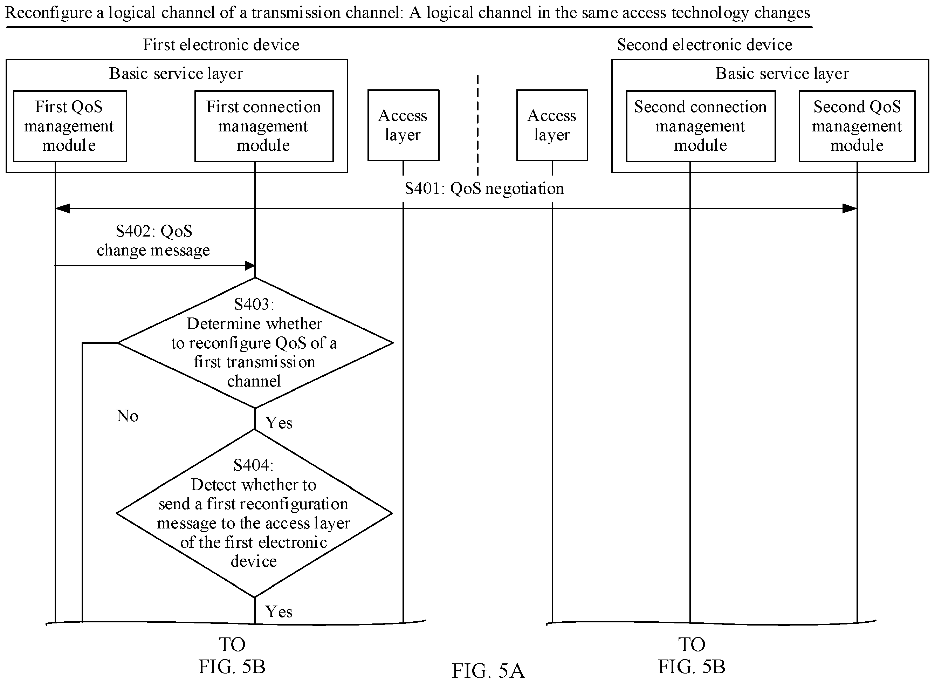

FIG. 5A to FIG. 5C are a schematic flowchart of another embodiment of a transmission channel reconfiguration method according to an embodiment of this application;

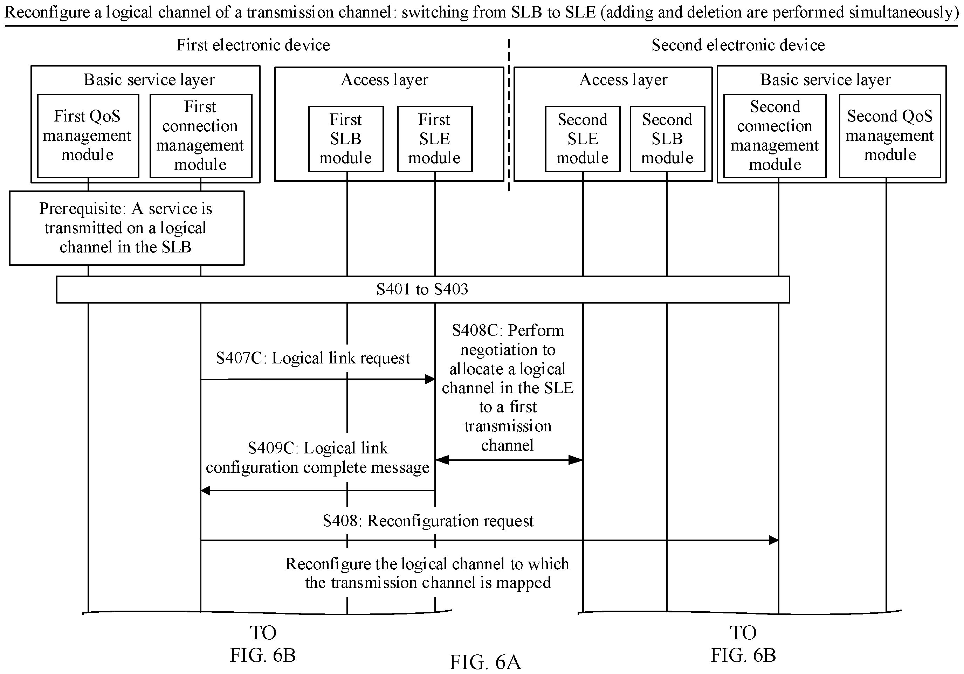

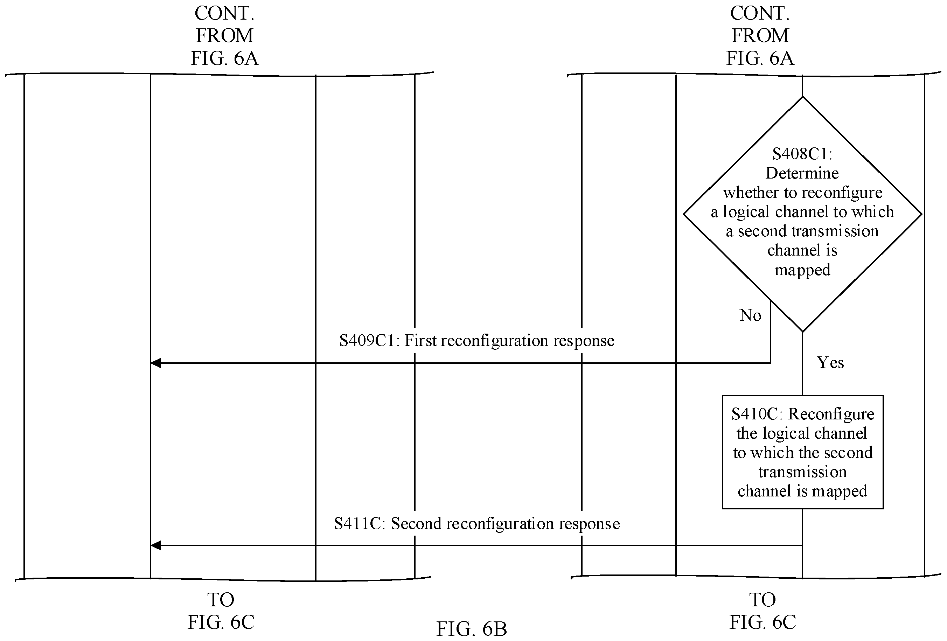

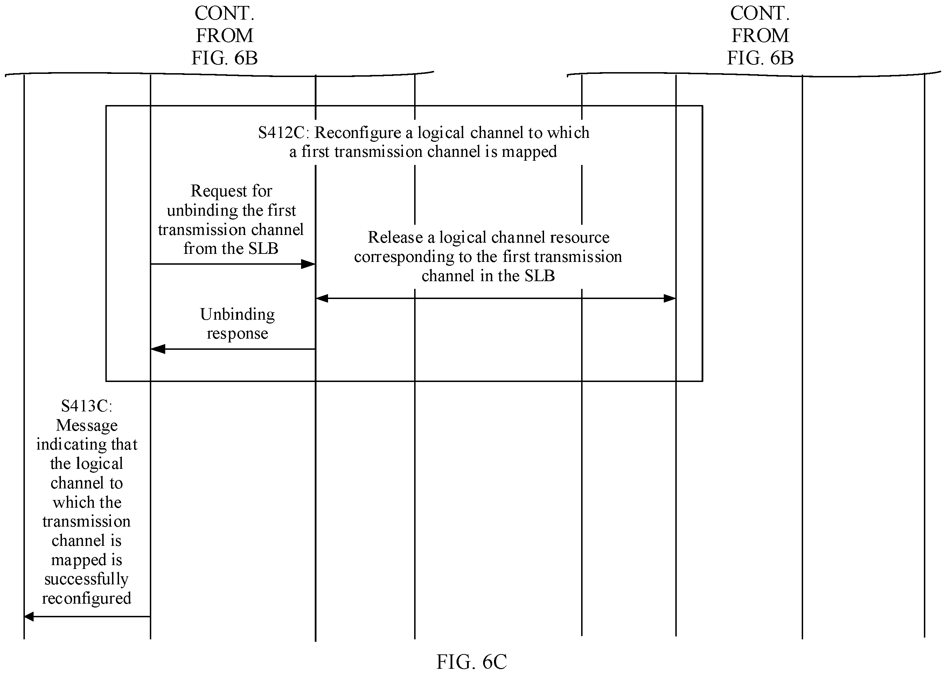

FIG. 6A to FIG. 6C are a schematic flowchart of another embodiment of a transmission channel reconfiguration method according to an embodiment of this application;

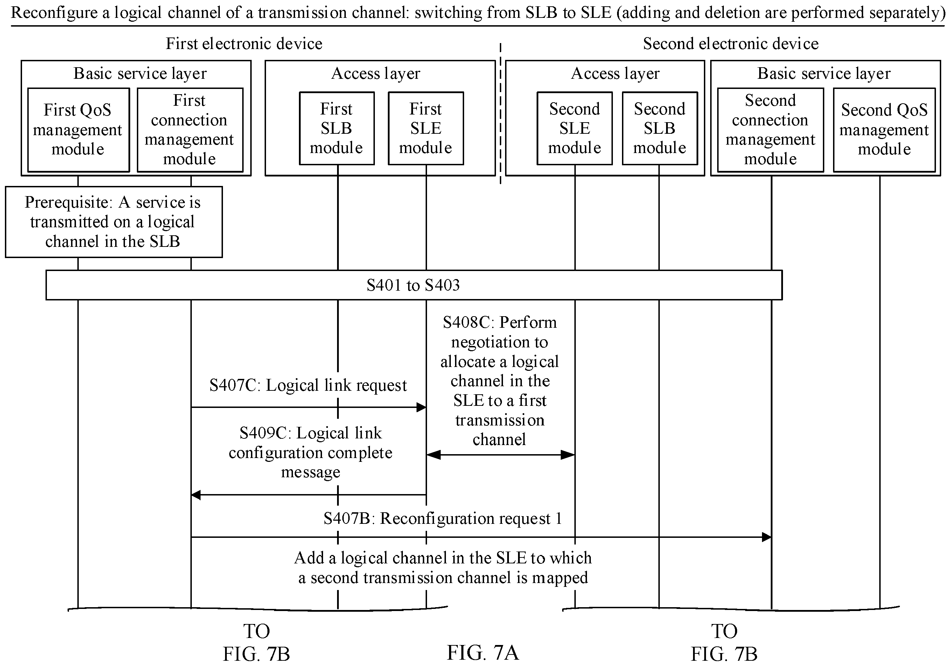

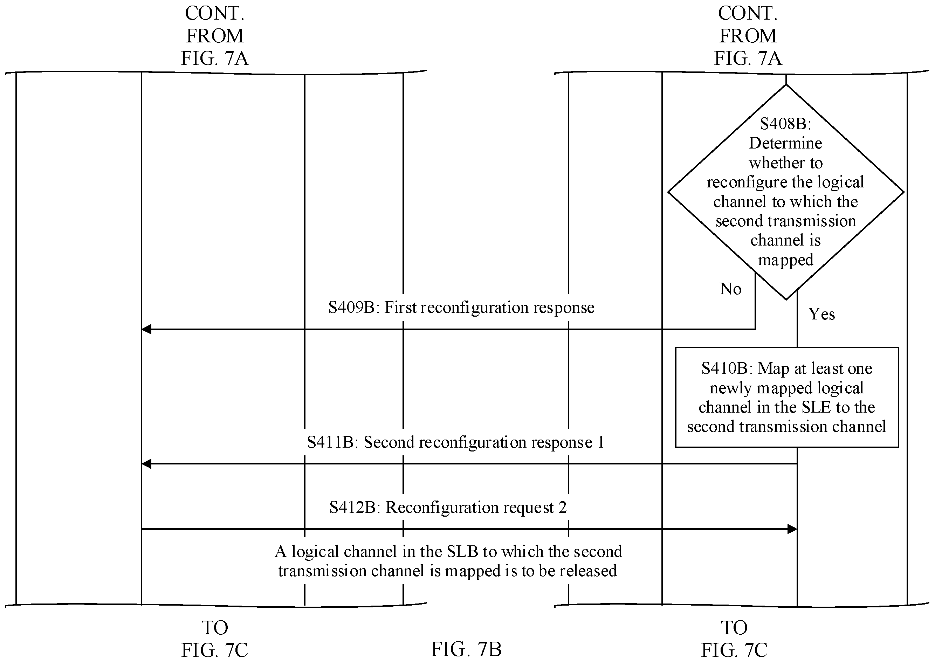

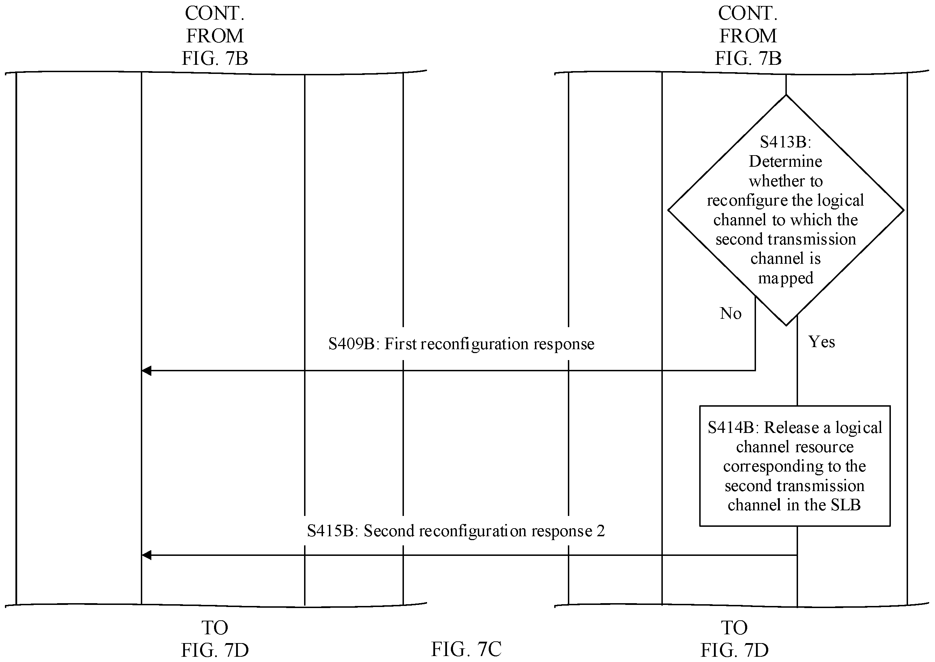

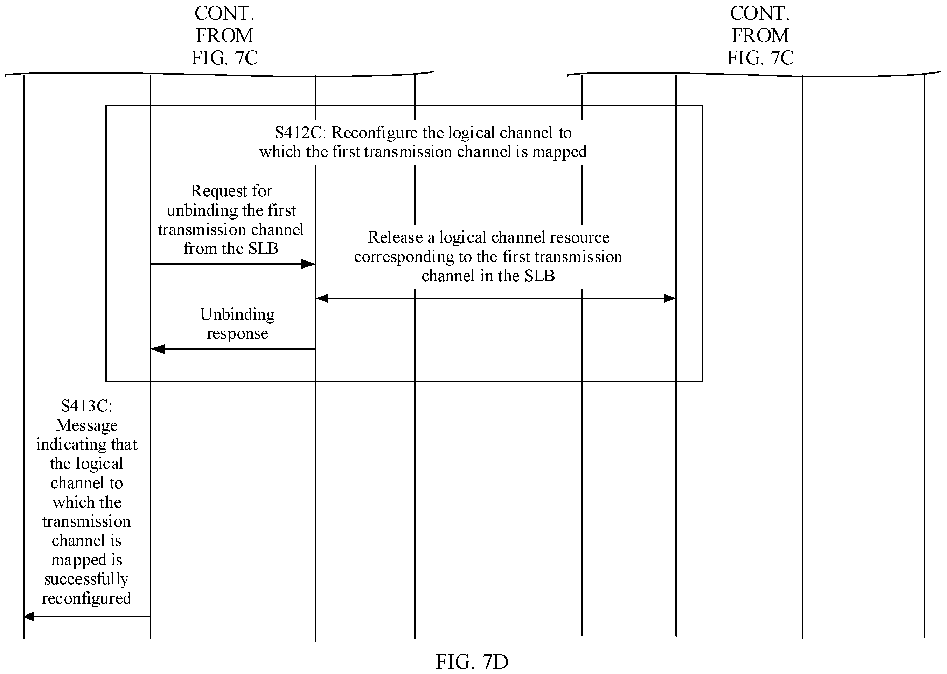

FIG. 7A to FIG. 7D are a schematic flowchart of another embodiment of a transmission channel reconfiguration method according to an embodiment of this application;

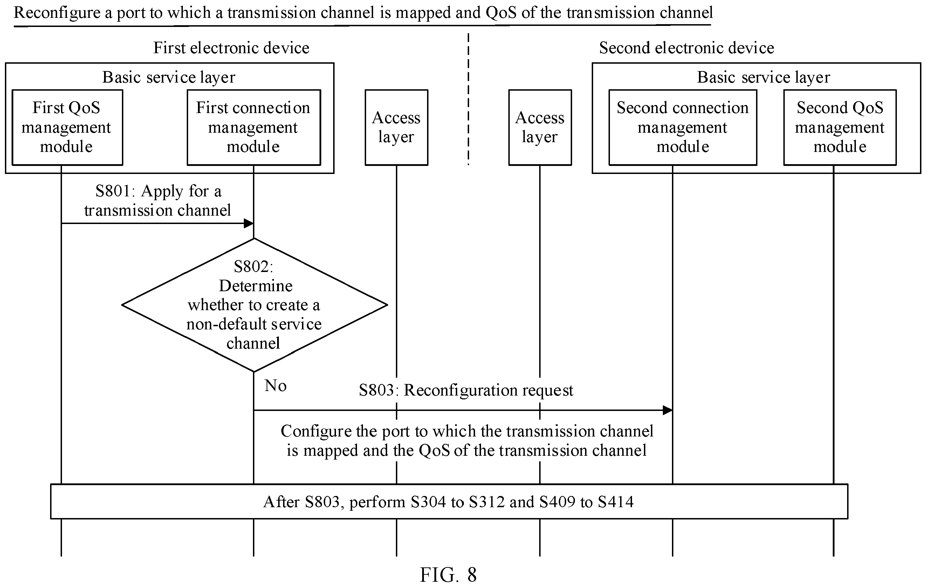

FIG. 8 is a schematic flowchart of another embodiment of a transmission channel reconfiguration method according to an embodiment of this application;

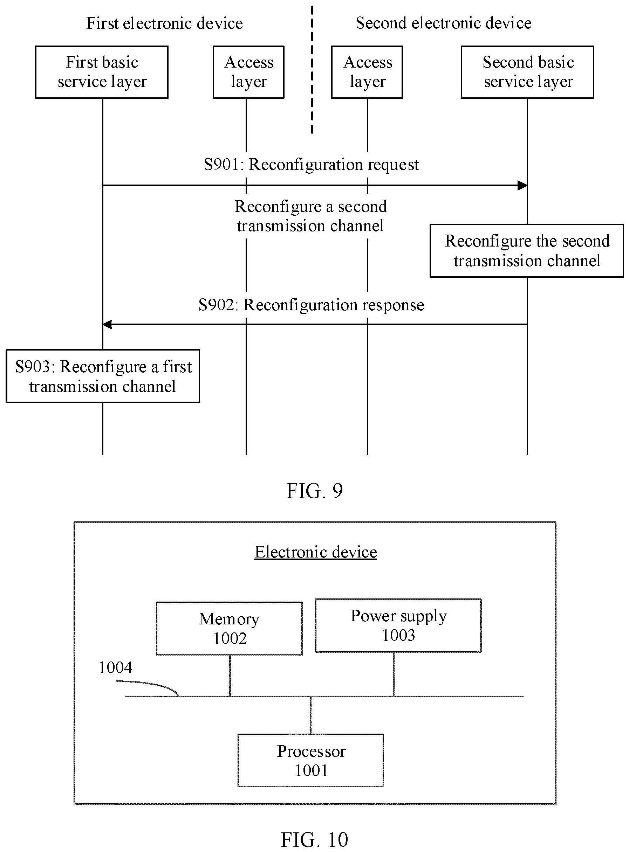

FIG. 9 is a schematic flowchart of another embodiment of a transmission channel reconfiguration method according to an embodiment of this application; and
FIG. 10 is a diagram of a structure of an electronic device according to an embodiment of this application.

### DESCRIPTION OF EMBODIMENTS

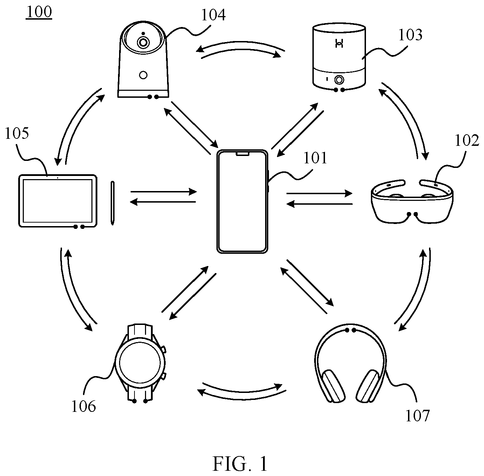

FIG. 1 is a diagram of a communication system to which an embodiment of this application is applicable. As shown in FIG. 1, a communication system 100 to which an embodiment of this application is applicable may include a plurality of electronic devices, and any two of the plurality of electronic devices may communicate with each other.

Any electronic device in the communication system 100 is used as an example. The electronic device may be any device having a wireless transceiver function, including but not limited to a cellular phone (cellular phone), a cordless phone, a session initiation protocol (session initiation protocol, SIP) phone, a smartphone (smartphone), a wireless local loop (wireless local loop, WLL) station, a personal digital assistant (personal digital assistant, PDA), a handheld device having a wireless communication function, a computing device, a vehicle-mounted device, a wearable device, an uncrewed aerial vehicle device, an electronic device in the Internet of things or the Internet of vehicles, or another device connected to a wireless modem.

Alternatively, the electronic device may be an electronic device in virtual reality (virtual reality, VR), an electronic device in augmented reality (augmented reality, AR), an electronic device in industrial control (industrial control) (for example, smart manufacturing), an electronic device in self driving (self driving), an electronic device in remote medical (remote medical), an electronic device in a smart grid (smart grid), an electronic device in a smart city (smart city), an electronic device in a smart home (smart home), or the like.

The electronic devices may alternatively be personal portable electronic devices, computer peripheral devices, and various household or industrial electrical devices, including but not limited to a smartphone (smartphone), a smart screen, a smart speaker (for example, an artificial intelligence (artificial intelligence, AI) speaker, a high-fidelity (high-fidelity, Hi-Fi) speaker), a smart sensor, a television (television), a wireless headset, a VR head-mounted display, a tablet computer, a display, a camera, a portable computer, a laptop computer (laptop computer), a vehicle-mounted computer, a vehicle-mounted terminal (for example, a microphone or a speaker), a projector, a printer, a smart wristband (smart wristband), a smart watch (smart watch), a pair of smart glasses, a smart car, a smart lathe, a smart monitoring device, a router, or the like. A specific form of the electronic device is not specifically limited in embodiments of this application. Types of the plurality of electronic devices in the communication system 100 may be partially the same, may be completely the same, or may be completely different.

As an example rather than a limitation, the communication system 100 shown in the figure includes electronic devices 101, 102, 103, 104, 105, 106, and 107. Any one of the electronic devices 101 to 107 may be an electronic device in any form mentioned above. It may be understood that the communication system 100 may include more or fewer electronic devices. This is not limited in embodiments of this application, but at least two electronic devices are included. It should be noted that the communication system 100 shown in FIG. 1 is merely an example for description. The communication system may further include another device, for example, a base station. This is not limited in embodiments of this application.

Electronic devices may communicate with each other by using a wireless short-range communication technology, to implement information sharing and wireless service transmission. With proposing of new requirements and development of new technologies, wireless short-range communication technologies continuously develop. To meet requirements of all-industry-oriented Internet scenarios, the sparklink alliance (sparklink alliance) is established and dedicated to promoting innovation of a next-generation wireless short-range communication technology and industry ecosystem, to carry applications in scenarios such as smart automobiles, smart homes, smart terminals, and smart manufacturing and meet ultimate performance requirements. The electronic device in embodiments of this application may perform communication based on a next-generation wireless short-range communication technology designed by the sparklink alliance.

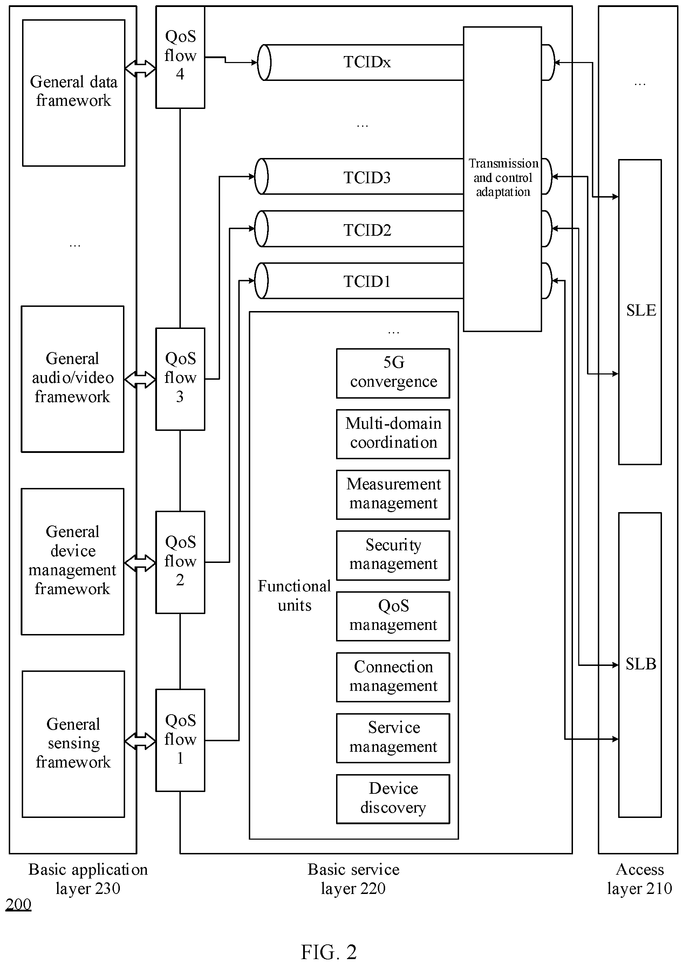

For the foregoing scenarios, a new protocol framework needs to be established to support the sparklink alliance wireless short-range communication technology and implement a complete process of a short-range service. FIG. 2 is a diagram of a protocol framework according to an embodiment of this application. The protocol framework may be applied to any electronic device that can implement short-range communication, for example, any electronic device in the communication system 100 shown in FIG. 1. As shown in FIG. 2, a protocol framework 200 includes an access layer 210, a basic service layer 220, and a basic application layer 230 from bottom to top. In other words, the electronic device that supports the sparklink alliance wireless short-range communication technology includes the access layer 210, the basic service layer 220, and the basic application layer 230.

The access layer 210 is mainly responsible for processing a bottom-layer logical link, for example, establishing, reconfiguring, or deleting the logical link, to meet a service requirement (for example, reliable data and real-time data) of the basic service layer 220. The access layer 210 includes a plurality of access technologies, including but not limited to an access technology of a sparklink basic (sparklink basic, SLB) short-range wireless communication system, an access technology of a sparklink low energy (sparklink low energy, SLE) short-range wireless communication system, and another access technology, for example, a Bluetooth low energy (Bluetooth low energy, BLE) technology, another future sparklink alliance access technology, and the like. In this embodiment of this application, only an SLB access technology and an SLE access technology are used as an example to briefly describe an architecture of the access layer 210.

For an electronic device that supports two access technologies such as SLB and SLE, an access layer of the electronic device may separately implement SLB access and SLE access by using different modules. In the following embodiments, a module for implementing the SLB access is referred to as an SLB module, and a module for implementing the SLE access is referred to as an SLE module. In this embodiment of this application, an upper-layer service may be dynamically transmitted by using a plurality of access technologies, to improve service transmission flexibility.

It may be understood that the names of the two sparklink alliance access technologies described above are examples, and should not be understood as a limitation on embodiments of this application. In another embodiment or in a future architecture, SLB and SLE may alternatively use other names.

The basic service layer 220 is mainly responsible for creating, adding, deleting, or releasing a transmission channel, or the like, and controlling a logical link (for example, selecting an access technology), to meet a service requirement (for example, traffic, a rate, audio quality, and a resolution) of the basic application layer 230. A design objective for the basic service layer is to be compatible with a plurality of access layer technologies, for example, compatible with the SLB and SLE access technologies described above, and reserve a capability of being compatible with more access technologies in the future.

The basic service layer 220 may include a plurality of modules or functional units that implement the foregoing design objective, including but not limited to a device discovery module, a service management module, a connection management module, a quality of service (quality of service, QoS) management module, a security management module, a measurement management module, a multi-domain coordination module, a 5G convergence module, and the like. A function of each module is not described in detail in this embodiment of this application. For details, refer to related descriptions in the sparklink alliance wireless short-range communication technology. For functions of modules in embodiments of this application, refer to related descriptions in the following embodiments.

Transmission at the basic service layer 220 may be classified into control plane transmission and service plane transmission. Correspondingly, transmission channels at the basic service layer 220 may include a control channel and a service channel, where the control channel is used to transmit control plane data, and the service channel is used to transmit service plane data. The following embodiments of this application describe in detail a procedure related to the service channel.

The basic application layer 230 mainly completes routing of data to the basic service layer 220 based on different service requirements. Based on different types of services, the basic application layer 230 may include a plurality of different service function sets (which may also be referred to as service modules or service frameworks), for example, an audio/video framework or a data framework. The different service function sets include classified service data processing.

For example, as shown in FIG. 2, the application layer 230 may include a general sensing framework, a general device management framework, a general audio/video framework, a general data framework, and the like. The general sensing framework includes processing on sensed data. The general device management framework includes processing on device management data. The general audio/video framework includes processing, for example, encoding and decoding, on audio/video data. The general data framework includes processing, for example, encryption and compression, on file data.

In embodiments of this application, the electronic device shown in FIG. 1 may support at least one access technology, for example, support at least one of the SLB access technology and the SLE access technology shown in FIG. 2. In an embodiment, the SLB access technology and the SLE access technology may also be respectively referred to as an SLB access standard (or access mode) and an SLE access standard (or access mode).

For ease of understanding this application, the following describes related technical terms in this application.

A port (port) is a basic channel for transmission at the basic application layer. All transmission processes at the basic application layer are based on ports. A plurality of ports may be mapped to a same transmission channel at a lower layer, or one port may be mapped to one transmission channel at a lower layer. Embodiments of this application mainly describe a technical solution in which a plurality of ports are mapped to a same transmission channel.

A transmission channel (transmission channel, TC) is a channel for transmission at the basic service layer. A plurality of ports (port) at an upper layer may be mapped to the transmission channel. A plurality of transmission channels may be mapped to a same logical channel at a lower layer, or one transmission channel may be mapped to logical channels of different access standards.

A logical channel (logical channel, LC) is a channel for transmission at the access layer. A plurality of transmission channels at an upper layer may be mapped to the logical channel. In an embodiment, the logical channel may also be referred to as a logical link or a logical path.

Specifically, as shown in FIG. 2, the basic application layer 230 has a concept of a port, the basic service layer 220 has a concept of a transmission channel, and the access layer 210 has a concept of a logical channel. In other words, the port is a channel at the basic application layer 230, the transmission channel is a channel at the basic service layer 220, and the logical channel is a channel at the access layer 210. A plurality of ports may be mapped to a same transmission channel. In other words, there is a mapping relationship between a port and a transmission channel. A plurality of transmission channels may be mapped to a same logical channel, or one transmission channel may be mapped to a plurality of logical channels (with different access standards). In other words, there is a mapping relationship between a transmission channel and a logical channel. When two electronic devices communicate with each other, service data may be sent to another electronic device through a path of a port, a transmission channel, and a logical channel of one electronic device.

To distinguish between logical channels, a logical channel identifier (logical channel identifier, LCID) is defined in embodiments of this application, to uniquely identify a logical channel. To distinguish between transmission channels, a transmission channel identifier (transmission channel identifier, TCID) is defined, to uniquely identify a transmission channel.

The foregoing describes the channel used by each layer to route data. The following briefly describes a data transmission path with reference to FIG. 2.

As shown in FIG. 2, when service data in an upper-layer application needs to be transmitted, the basic application layer 230 transmits the data to the basic service layer 220 through a port by using a data flow (flow), and the basic service layer 220 selects one or more transmission channels for transmission. Because there is a mapping relationship between a transmission channel and a logical channel, correspondingly, after receiving the data, the access layer 210 continues to transmit the data through a corresponding logical channel.

For example, the basic service layer 220 may include transmission channels TCID1 to TCIDx. The basic service layer 220 may select TCID1 to transmit a QoS flow 1 sent by the general sensing framework, select TCID2 to transmit a QoS flow 2 sent by the general device management framework, select TCID3 to transmit a QoS flow 3 sent by the general audio/video framework, select TCIDx to transmit a QoS flow 4 sent by the general data framework, and the like. At the access layer 210, data transmitted through TCID1 is transmitted through a logical channel supporting SLB, data transmitted through TCID2 is transmitted through a logical channel supporting SLB, data transmitted through TCID3 is transmitted through a logical channel supporting SLE, and data transmitted through TCIDx is transmitted through a logical channel supporting SLE. It may be understood that a correspondence between a data flow and a transmission channel and a correspondence between a transmission channel and a logical channel that are shown in FIG. 2 are merely examples, and should not be construed as a limitation on this application.

The transmission channel may include a service channel and a control channel, where the service channel is used to transmit service plane data, and the control channel is used to transmit control plane data. Creation of a control channel is a basis for creation of a service channel between electronic devices. Therefore, a procedure related to the service channel in this embodiment of this application is performed based on the creation of the control channel. A procedure for creating the control channel is not described in detail in this embodiment of this application again.

The service channel may include a unicast service channel, a multicast service channel, and a broadcast service channel. Details are not described in embodiments of this application. The unicast service channel includes a default service channel and a non-default service channel. The default service channel is automatically created after the control channel is created, and the non-default service channel is created as required.

Embodiments of this application describe a transmission channel reconfiguration process, and reconfiguration of a transmission channel can improve utilization of the transmission channel. In an embodiment, the reconfiguration of the transmission channel may include: reconfiguration of a port (port) to which the transmission channel is mapped, reconfiguration of QoS of the transmission channel, and reconfiguration of a logical channel to which the transmission channel is mapped.

It should be understood that the reconfiguration of the transmission channel described in embodiments of this application is reconfiguration of a service channel used to transmit service data. Therefore, in descriptions of the "transmission channel" in the following embodiments, the transmission channel may be understood as a service channel in a narrow sense. The service channel may still be identified by using the TCID described above. In other words, in descriptions of the "TCID" in the following embodiments, the TCID may be understood as an identifier of the service channel in a narrow sense. In some other embodiments, the TCID used to identify the service channel may also be referred to as a "service channel identifier" or another name. This is not limited in embodiments of this application.

Similarly, the "logical channel" in the following embodiments may be identified by using the LCID described above. In other words, in descriptions of the "LCID" the following embodiments, the LCID may be understood as an identifier of the logical channel in a narrow sense. In some other embodiments, the LCID used to identify the logical channel may also be referred to as a "logical channel identifier" or another name. This is not limited in embodiments of this application.

It should be understood that, the following embodiments relate to a first electronic device and a second electronic device. Because both the first electronic device and the second electronic device support the sparklink alliance wireless short-range communication technology, structures of the first electronic device and the second electronic device may be shown in FIG. 2. In embodiments of this application, for ease of distinguishing between modules in the first electronic device and modules in the second electronic device, a prefix "first" may be added to each module in the first electronic device, and a prefix "second" may be added to each module in the second electronic device. For example, a QoS management module in the first electronic device may be referred to as a first QoS management module, and a QoS management module in the second electronic device may be referred to as a second QoS management module. For example, a connection management module in the first electronic device may be referred to as a first connection management module, and a connection management module in the second electronic device may be referred to as a second connection management module. Other modules are similar.

Similarly, in an embodiment, for ease of distinguishing between layers of the first electronic device and layers of the second electronic device, a prefix "first" may be added to each layer of the first electronic device, and a prefix "second" may be added to each layer of the second electronic device. For example, a basic service layer of the first electronic device may be referred to as a first basic service layer, and a basic service layer of the second electronic device may be referred to as a second basic service layer.

The following describes, with reference to specific embodiments, the transmission channel reconfiguration method provided in embodiments of this application. The following several embodiments may be combined with each other, and a same or similar concept or process may not be described repeatedly in some embodiments. It should be noted that the first electronic device and the second electronic device described below each include the basic application layer 230, the basic service layer 220, and the access layer 210 shown in FIG. 2.

First: reconfiguration of a port to which a transmission channel is mapped.

In this embodiment, for example, when the first electronic device and the second electronic device jointly execute a wireless service, for example, when a user uses the first electronic device (for example, a mobile phone) to transmit audio data that requires 10 Mbps to the second electronic device (for example, a wireless headset) for music playing, the basic service layer in the first electronic device may allocate a 10 Mbps transmission channel to a first service (namely, the audio data that requires 10 Mbps). However, in an actual transmission process, the first service occupies 5 Mbps of the transmission channel. In this case, when the user continues to use the first electronic device to transmit audio data (namely, a second service) that requires 2 Mbps to the second electronic device for music playing, the basic service layer of the first electronic device may use the 10 Mbps transmission channel to transmit the audio data that requires 2 Mbps. The basic service layer of the first electronic device does not need to create a new transmission channel, and directly uses the created transmission channel to transmit data of a plurality of services. This can improve utilization of the transmission channel and data transmission efficiency.

When a new service (for example, the second service) is initiated in the first electronic device, the basic application layer of the first electronic device may negotiate with the basic application layer of the second electronic device.

For example, in a process in which the basic application layer of the first electronic device transmits the audio data (for example, the audio data that requires 10 Mbps) of the first service to the access layer of the first electronic device, in response to starting to transmit the audio data (for example, the audio data that requires 2 Mbps) of the second service, the basic application layer of the first electronic device may negotiate with the basic application layer of the second electronic device, to transmit the audio data that requires 2 Mbps.

In an embodiment, data related to the negotiation process may be transmitted through a created default service channel. The default service channel is automatically created after a control channel is created.

In an embodiment, the negotiation between the basic application layer of the first electronic device and the basic application layer of the second electronic device may include but is not limited to port negotiation, service negotiation, and application quality of service (quality of service, QoS) negotiation. For example, service negotiation, QoS negotiation, port negotiation, and the like between the first electronic device and the second electronic device may be uniformly transmitted on the default service channel by using a data template provided by a service framework at the basic application layer by using a service management module. The service negotiation and the QoS negotiation are not described in detail in embodiments of this application.

For the port negotiation, an objective of the negotiation between the basic application layer of the first electronic device and the basic application layer of the second electronic device is to determine a specific port used by the basic application layer of the first electronic device to transmit data and a specific port used by the basic application layer of the second electronic device to transmit data. For example, a result of the negotiation between the basic application layer of the first electronic device and the basic application layer of the second electronic device may be: The first electronic device uses a first port (port1) for mapping, and the second electronic device uses a second port (port2) for mapping. Correspondingly, there is a mapping relationship between the first port port1 and the second port port2, and the basic application layer of the first electronic device and the basic application layer of the second electronic device need to maintain the mapping relationship between the first port and the second port. In other words, the base application layer of the first electronic device stores the mapping relationship between the first port and the second port, and the base application layer of the second electronic device stores the mapping relationship between the first port and the second port.

Based on the foregoing descriptions, FIG. 3A-1 and FIG. 3A-2 are a schematic flowchart of an embodiment of the transmission channel reconfiguration method according to an embodiment of this application. As shown in FIG. 3A-1 and FIG. 3A-2, before the basic service layer of the first electronic device transmits the audio data (the second service) that requires 2 Mbps through the 10 Mbps transmission channel, the 10 Mbps transmission channel needs to be reconfigured, to enable the 10 Mbps transmission channel to be mapped a port of the audio data that requires 10 Mbps and a port of the audio data that requires 2 Mbps, so that the first electronic device transmits the audio data that requires 2 Mbps through the 10 Mbps transmission channel. The following procedure may be specifically included.

S301: The first QoS management module applies to the first connection management module for a transmission channel.

That the first QoS management module applies to the first connection management module for a transmission channel may be: The first QoS management module applies to the first connection management module for a transmission channel used to transmit the data of the second service. The transmission channel is a service channel. For example, the transmission channel may be a service channel for transmitting the audio data that requires 2 Mbps. This step may also be understood as that the first QoS management module applies to the first connection management module for a service channel for the first port and the second port.

In an embodiment, the first QoS management module may send information #31 to the first connection management module, where the information #31 is used to apply for a service channel for the first port and the second port.

The information #31 may include service channel type indication information, port information, a sparklink quality of service index (sparklink qoS index, SLQI), and the like. The service channel type indication information indicates an applied service channel type, where the service channel type may include a unicast service channel, a multicast service channel, and a broadcast service channel. If the service channel type indication information indicates that the applied service channel is a unicast service channel, the unicast service channel refers to a non-default service channel. The port information indicates a port mapped to the service channel, namely, a port obtained through negotiation in step S301. In this embodiment of this application, the port information includes the first port and the second port, where the first port is configured to be mapped to a service channel on the first electronic device side, and the second port is configured to be mapped to a service channel on the second electronic device side. The SLQI indicates a requirement of a service for a service channel, for example, a transmission rate, a delay, a packet loss rate, a communication periodicity, and a maximum packet size.

In an embodiment, the information #31 may further include an additional parameter, for example, transmission mode indication information or dedicated bearer indication information. The transmission mode indication information indicates a data transmission mode. The transmission mode may include a basic mode, a transparent transmission mode, a normal mode, a flow control mode, a flow mode, a retransmission mode, and the like. Details about the transmission mode are not described in this embodiment of this application. For details, refer to related descriptions in the sparklink alliance wireless short-range communication technology.

Dedicated bearer indication information in the additional parameter indicates whether the service channel is dedicated to transmitting data of a specific service. In this embodiment of this application, if receiving a dedicated bearer indication, the first connection management module allocates a new service channel to the first port, and does not reuse an existing service channel, and the newly allocated service channel is not reused in another subsequent procedure.

In this embodiment of this application, if the information #31 includes the additional parameter, the first connection management module may set a related parameter based on the additional parameter in the information #31. If the information #31 does not include the additional parameter, the first connection management module may independently set a related parameter, or set a related parameter according to a preset rule. This is not limited in embodiments of this application.

S302: The first connection management module determines whether to create a non-default service channel; and if determining not to create a non-default service channel, performs S303; or if determining to create a non-default service channel, performs S313.

That the first connection management module determines whether to create a non-default service channel may be understood as that the first connection management module needs to determine whether to map the first port to an existing service channel, or create a new service channel and map the first port to the new service channel (namely, the non-default service channel).

In an embodiment, that the first connection management module determines whether to create a non-default service channel may alternatively be understood as that the first connection management module determines whether to reconfigure a first transmission channel. The first transmission channel is a transmission channel created at the basic service layer in the first electronic device. It should be understood that, in an embodiment, if the first connection management module determines not to create the non-default service channel, the first transmission channel may be reconfigured.

There may be a plurality of implementations when the first connection management module determines whether to create the non-default service channel.

In an example, the first connection management module may determine, based on the QI in the information #31, whether to create the non-default service channel. For example, a same QI means that a same service channel may be reused. To be specific, if the QI included in the information #31 is the same as a QI of a transmitted service, the existing service channel may be reused, and no new non-default service channel is created.

In another example, the first connection management module may determine, based on the transmission mode indication information in the information #31, whether to create the non-default service channel. For example, if an upper layer indicates that the transmission mode of the service data is transparent transmission, a new non-default service channel is created, and an existing service channel is not reused.

In still another example, the first connection management module may determine, based on the dedicated bearer indication information in the information #31, whether to create the non-default service channel. For example, if the dedicated bearer indication information indicates that the service channel is dedicated to transmitting new service data, the non-default service channel is created.

In other words, the first connection management module may determine, based on the information #31, whether to create the non-default service channel. In an embodiment, if the information #31 sent by the upper layer does not indicate the first connection management module to create a new service channel, the first connection management module may perform determining according to an algorithm (for example, a preset rule) of the connection management module. For example, when it is preset that the upper layer does not indicate whether to create the non-default service channel, the non-default service channel is not created by default or is created by default.

In an example, the first connection management module may alternatively determine, based on a remaining available bandwidth of the created transmission channel, whether to create the non-default service channel. For example, the created transmission channel is the first transmission channel used to transmit the audio data that requires 10 Mbps. If a remaining available bandwidth of the first transmission channel can meet a transmission requirement of the second service (for example, transmission of the audio data that requires 2 Mbps), the first connection management module may determine not to create the non-default service channel, but use the created first transmission channel to transmit the data of the second service. It should be understood that the remaining available bandwidth of the created transmission channel may be collected by a measurement management module (namely, a first measurement management module) at the basic service layer of the first electronic device, and the first connection management module may obtain the remaining available bandwidth of the transmission channel from the first measurement management module.

In another example, the first connection management module may alternatively determine, based on other information such as a service type, a bottom-layer channel capability, or a service transmission requirement, whether to create the non-default service channel. In a specific implementation, step S302 may be performed according to different algorithms of different vendors, and details are not described herein again.

In S302, if the first connection management module determines to create the non-default service channel, S313 may be performed, to create the non-default service channel. This process is not described in detail in this embodiment of this application. Embodiments of this application focus on the following process: The first connection management module determines not to create the non-default service channel, and may map the first port to the existing service channel (namely, the created service channel), to transmit new service data through the existing service channel, that is, S303 to S312 are performed.

S303: The first connection management module sends a reconfiguration request to the second connection management module.

The first connection management module may send the reconfiguration request to the second connection management module through a control channel of the basic service layer of the first electronic device.

In an embodiment, the reconfiguration request includes an identifier of the second port and an identifier of a second transmission channel created at the basic service layer of the second electronic device. It should be noted that the second transmission channel is a service channel created at the basic service layer of the second electronic device. In a specific implementation, a parameter (namely, content included in the reconfiguration request) in the reconfiguration request may be encoded in a specific format (for example, a TLV (abbreviation of tag, length, and value) format), so that the second electronic device can correctly parse the parameter.

It should be understood that, when the user uses the first electronic device to transmit the audio data (the first service) that requires 10 Mbps to the second electronic device for music playing, the basic application layer of the first electronic device and the basic application layer of the second electronic device may also perform port (port) negotiation, and maintain a mapping relationship between the third port port3 and the fourth port port4. The third port port3 is a port at the basic application layer of the first electronic device, and the fourth port is a port at the basic application layer of the second electronic device. For details, refer to the related descriptions of negotiating the first port and the second port.

The basic application layer in the first electronic device may send the audio data that requires 10 Mbps to the basic service layer in the first electronic device through the third port port3. The basic service layer in the first electronic device allocates a 10 Mbps transmission channel, for example, the first transmission channel TCID1, to the first service. The first connection management module may map port3 to the first transmission channel TCID1. Correspondingly, the first connection management module may determine the second transmission channel TCID2 (that is, corresponding to the first transmission channel TCID1) to which port4 (mapped to port3) needs to be mapped. The first connection management module may send port3, port4, TCID1, and TCID2 to the second connection management module, and the second connection management module may map port4 to TCID2. To be specific, when the first electronic device transmits the audio data that requires 10 Mbps to the second electronic device through port3, TCID1, and the LCID in the first electronic device, the second electronic device may correspondingly receive the audio data that requires 10 Mbps through the LCID in the second electronic device, TCID2, and port4.

In this way, both the first connection management module and the second connection management module may maintain the mapping relationship between the third port and the fourth port, a mapping relationship between port3 and the first transmission channel TCID1, and a mapping relationship between port4 and the second transmission channel TCID2.

In this embodiment, the first connection management module may determine to map the first port (the port corresponding to the second service) to the created service channel. For example, if the first connection management module determines to map port1 to the created first transmission channel TCID1, the first connection management module may determine, based on the stored mapping relationship, that the second transmission channel TCID2 in the second electronic device has a mapping relationship with the first transmission channel TCID1. Therefore, the reconfiguration request may carry the identifier "port2" of the second port and the identifier "TCID2" of the second transmission channel.

In an embodiment, there may be at least one second transmission channel. For example, there may be at least one transmission channel that is in the first electronic device and that is used to transmit the audio data that requires 10 Mbps. If the first connection management module determines to use some or all of the at least one transmission channel to transmit a file that requires 2 Mbps, the first transmission channel may be some or all of the at least one transmission channel. Correspondingly, the second transmission channel is at least one transmission channel that is in the second electronic device and that has a mapping relationship with the first transmission channel.

Therefore, there may be at least one second transmission channel in the reconfiguration request, and the reconfiguration request may include: the identifier of the second port, and an identifier of the at least one second transmission channel created at the basic service layer of the second electronic device.

In an embodiment, the reconfiguration request may further include: an identifier of the first port, and an identifier of the at least one first transmission channel created at the basic service layer of the first electronic device.

In other words, in an embodiment, the reconfiguration request may include: the identifier of the second port, the identifier of the at least one second transmission channel, the identifier of the first port, and the identifier of the at least one first transmission channel. For example, the following uses an example in which "at least one" may be eight for description.

For example, a signaling structure of the reconfiguration request may be shown as follows:

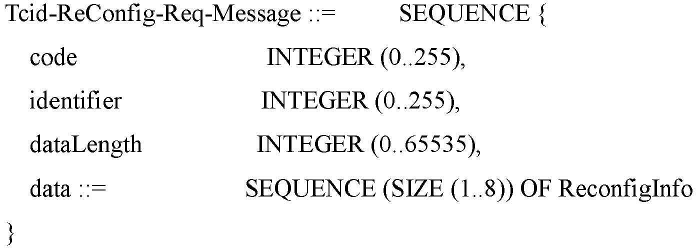

Herein, Tcid-ReConfig-Req-Message represents a reconfiguration request message, where code in the message represents the reconfiguration request, identifier represents an identifier of the reconfiguration request, dataLength represents a data length of the reconfiguration request, and data is the content carried in the reconfiguration request, for example, information about eight second transmission channels. When the first connection management module sends a plurality of reconfiguration requests to the second connection management module, identifiers (identifiers) of the reconfiguration requests are used to distinguish between the different reconfiguration requests. Herein, SEQUENCE (SIZE (1)) OF ReconfigInfo to SEQUENCE (SIZE (8)) OF ReconfigInfo respectively represents the information about the eight second transmission channels.

Herein, ReconfigInfo carries information about the second transmission channel, SEQUENCE (SIZE (1)) OF ReconfigInfo is used as an example, and content carried in ReconfigInfo is as follows:

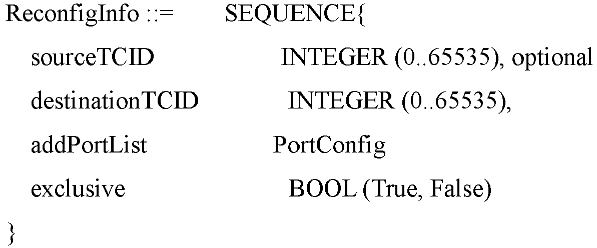

Herein, sourceTCID is an identifier TCID1 of the first transmission channel, destinationTCID is an identifier TCID2 of the second transmission channel, PortConfig represents port reconfiguration information, addPortList represents a port to which the second transmission channel is newly mapped, and exclusive represents reservation. It should be understood that, "optional" represents that the reconfiguration request may not carry the parameter.

Herein, PortConfig may include:

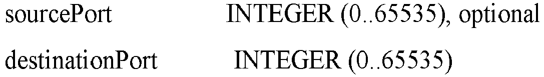

Herein, sourcePort represents an identifier port1 of the first port, and destinationPort represents an identifier port2 of the second port. In conclusion, it can be learned from the signaling structure of the reconfiguration request that the reconfiguration request is used to "add a port to which the second transmission channel is mapped, where the port is the second port port2".

S304: The second connection management module determines whether to perform reconfiguration; and if determining not to perform reconfiguration, performs S305; or if determining to perform reconfiguration, performs S306.

When receiving the reconfiguration request, the second connection management module may determine whether to reconfigure the transmission channel.

In an embodiment, if detecting that the identifier of the second port in the reconfiguration request is incorrect or the identifier of the second transmission channel is incorrect, the second connection management module may determine not to perform reconfiguration. For example, that the identifier of the second port is incorrect may be but not limited to that the second electronic device does not have the second port. That the identifier of the second transmission channel is incorrect may be but not limited to that the second transmission channel is not created in the second electronic device.

In an embodiment, the second connection management module may determine, based on a capability of the second transmission channel, whether to perform reconfiguration. For example, if there is no remaining available bandwidth (or remaining resource) on the second transmission channel, and a transmission capability of the second transmission channel is poor, the second connection management module determines not to perform reconfiguration. For example, if the remaining available bandwidth of the second transmission channel is greater than a half of a bandwidth of the second transmission channel, the second connection management module determines to perform reconfiguration.

That the second connection management module determines whether to perform reconfiguration is used as an example for description. It should be understood that the second connection management module may alternatively perform determining according to another algorithm (for example, a preset rule). Details are not described in embodiments of this application.

S305: The second connection management module sends a first reconfiguration response to the first connection management module.

The first reconfiguration response represents that the second connection management module does not accept reconfiguration of the transmission channel.

In an embodiment, the first reconfiguration response may include an identifier of the first transmission channel. In an embodiment, the first reconfiguration response may include an identifier of the second transmission channel and an identifier of the first transmission channel. In an embodiment, the first reconfiguration response may include: an identifier of the second transmission channel, an identifier of the first transmission channel, a reason why the reconfiguration request fails (that is, the second connection management module does not accept reconfiguration), and the like.

For example, a signaling structure of the first reconfiguration response may be as follows:

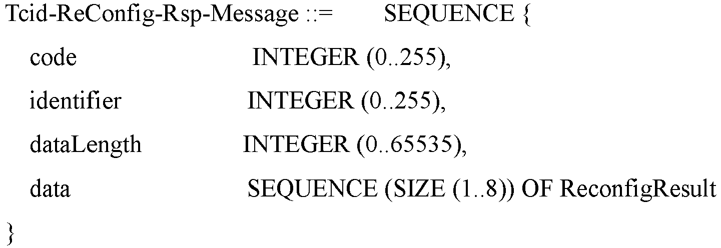

Herein, SEQUENCE (SIZE (1..8)) OF ReconfigResult represents a reconfiguration result of the eight transmission channels. It should be understood that the reconfiguration response is used to respond to the reconfiguration request. If a quantity of responded transmission channels is less than a quantity of requested transmission channels (for example, 8), the second connection management module may subsequently need to continue to respond to a remaining transmission channel, and the first connection management module needs to continue to wait for a remaining response.

For example, ReconfigResult may include:

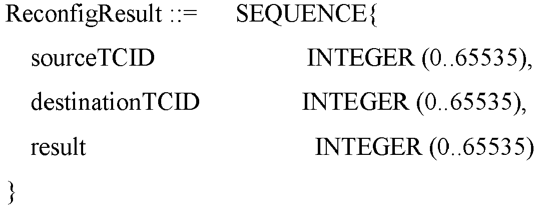

Herein, sourceTCID is the second transmission channel TCID2 in the second electronic device, destinationTCID is the first transmission channel TCID1 in the first electronic device, and result represents a reconfiguration result. Herein, result may be shown in the following Table 1:

**Table 1**

| Result | Description |
|---|---|
| 0x0000 | Reconfiguration succeeds |
| 0x0001 | No resource |
| 0x0002 | A port (port) change does not meet an expectation |
| 0x0003 | A logical channel Lcid change does not meet an expectation |
| 0x0004 | A change of the SLQI in the transmission channel does not meet an expectation |
| Other | Reserved |

For example, if the basic service layer of the second electronic device determines not to reconfigure the second transmission channel, result in the reconfiguration response (namely, the first reconfiguration response) may be, for example, 0x0001.

S306: The second connection management module maps the second port to the second transmission channel.

If the second connection management module determines to reconfigure the second transmission channel, the second connection management module may map the second port to the second transmission channel.

S307: The second connection management module sends a mapping relationship between the second port and the second transmission channel to the second QoS management module.

In an embodiment, the second connection management module may send, to the second QoS management module, the identifier of the second transmission channel and the identifier of the second port to which the second transmission channel is mapped.

S308: The second QoS management module stores the mapping relationship between the second port and the second transmission channel.

S309: The second QoS management module feeds back a binding success message to the second connection management module.

In response to successfully storing the mapping relationship between the second port and the second transmission channel, the second QoS management module may feed back the binding success message to the second connection management module.

S310: The second connection management module sends a second reconfiguration response to the first connection management module.

The second reconfiguration response indicates that the second connection management module successfully completes reconfiguration of the second transmission channel.

In an embodiment, the second reconfiguration response may include the identifier of the second transmission channel, the identifier of the first transmission channel, the reconfiguration result, and the like.

For a signaling structure of the second reconfiguration response, refer to the signaling structure of the first reconfiguration response. A difference is that a reconfiguration result (result) in the second reconfiguration response indicates that the transmission channel is successfully reconfigured. For example, result may be 0x0000.

S311: The first connection management module may map the first port to the first transmission channel in response to the second reconfiguration response.

After receiving the second reconfiguration response, the first connection management module may determine that the second connection management module successfully reconfigures the second transmission channel, and the first connection management module may reconfigure the first transmission channel, that is, map the first port to the first transmission channel.

S312: The first connection management module feeds back, to the first QoS management module, a message indicating that the transmission channel is successfully applied for.

In an embodiment, the first connection management module may send, to the first QoS management module, the identifier of the first transmission channel and the identifier of the first port to which the first transmission channel is mapped. In other words, the first connection management module may send the mapping relationship between the first port and the first transmission channel to the first QoS management module.

It should be understood that, that the first connection management module feeds back, to the first QoS management module, a message indicating that the transmission channel is successfully applied for may be understood as that the first basic service layer completes reconfiguration of the first transmission channel. Correspondingly, the first basic service layer may transmit the data of the first service and the data of the second service through a reconfigured first transmission channel. The second basic service layer may transmit the data of the first service and the data of the second service through a reconfigured second transmission channel.

S313: The first connection management module creates a non-default service channel.

A process in which the first connection management module creates the non-default service channel is not described in this embodiment of this application.

In this embodiment of this application, when the first electronic device initiates the new second service, if the first connection management module determines to map the first port for transmitting the second service to the created first transmission channel, the first connection management module may interact with the second connection management module, so that the first electronic device reconfigures the port of the first transmission channel and the second electronic device reconfigures the port of the second transmission channel, and the first electronic device can send the data of the new second service through the created first transmission channel. This can improve utilization of the transmission channel and improve data transmission efficiency.

As described in the foregoing embodiments, the electronic device may add a newly mapped port to the transmission channel. In an embodiment, the electronic device may alternatively release a port to which the transmission channel is mapped. For example, the user uses the first electronic device (for example, a mobile phone) to transmit the audio data that requires 2 Mbps to the second electronic device (for example, a wireless headset) for audio playing. When the audio playing ends (for example, after S313), refer to FIG. 3B-1 and FIG. 3B-2. The method may include the following steps.

S301A: The first QoS management module sends an unbinding request to the first connection management module in response to an end of a service (for example, the first service or the second service).

The unbinding request indicates the first connection management module to release the port to which the transmission channel is mapped. It should be understood that the following uses the second service as an example for description, and a port corresponding to the second service is the first port.

In an embodiment, the unbinding request may include the identifier of the first port for transmitting the data of the service (for example, the audio data that requires 2 Mbps) by the user.

S302A: In response to the unbinding request, the first connection management module detects whether the first transmission channel used to transmit the data of the first service is mapped to another port in addition to the first port; and if the first transmission channel is not mapped to another port in addition to the first port, performs S303A; or if the first transmission channel is mapped to another port in addition to the first port, performs S304A.

In response to the unbinding request, the first connection management module may determine, based on the identifier of the first port, the first transmission channel to which the first port is mapped, and then detect, based on the mapping relationship stored by the first connection management module, whether the first transmission channel is mapped to another port in addition to the first port.

S303A: The first connection management module unbinds the first transmission channel from the first port.

The first connection management module may execute a process of releasing the first transmission channel, that is, unbinding the first transmission channel from the first port. For the release process, refer to related descriptions in the sparklink alliance wireless short-range communication technology.

It should be understood that S311A may be performed after S303A.

S304A: The first connection management module sends a reconfiguration request to the second connection management module.

If the first connection management module detects that the first transmission channel is mapped to another port in addition to the first port, the first connection management module needs to interact with the basic service layer of the second electronic device, to reconfigure the first transmission channel and the second transmission channel.

Therefore, the first connection management module sends the reconfiguration request to the second connection management module. The reconfiguration request indicates the second connection management module to unbind the second port to which the second transmission channel is mapped.

In an embodiment, the reconfiguration request includes the identifier of the second transmission channel and the identifier of the second port from which the second transmission channel is to be unbound.

In an embodiment, a signaling structure of the reconfiguration request may be shown as follows:

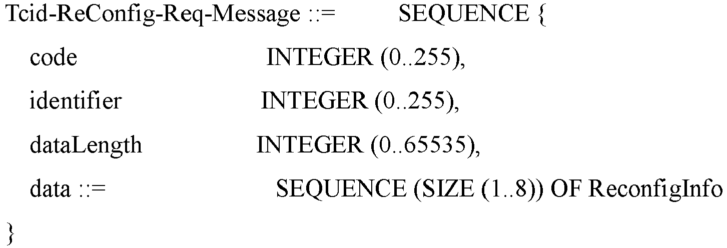

For Tcid-ReConfig-Req-Message, refer to the foregoing related descriptions.

Herein, ReconfigInfo carries information about the second transmission channel, SEQUENCE (SIZE (1)) OF ReconfigInfo is used as an example, and content carried in ReconfigInfo is as follows:

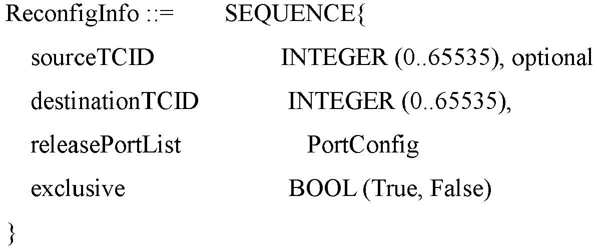

Herein, sourceTCID is the identifier TCID1 of the first transmission channel, destinationTCID is the identifier TCID2 of the second transmission channel, PortConfig represents port reconfiguration information, where for details, refer to the foregoing related descriptions, and exclusive represents reservation. Different from the reconfiguration request indicating to add the second port to which the "second transmission channel" is mapped, the reconfiguration request indicating to "unbind the second port to which the second transmission channel is mapped" includes "releasePortList" instead of "addPortList", and releasePortList represents unbinding the port to which the second transmission channel is mapped.

S305A: The second connection management module unbinds the second port to which the second transmission channel is mapped.

S306A: The second connection management module sends a message for unbinding the second transmission channel from the second port to the second QoS management module.

The unbinding message indicates the second QoS management module to delete the stored second port to which the second transmission channel is mapped.

S307A: The second QoS management module deletes the second port to which the second transmission channel is mapped.

S308A: The second QoS management module feeds back a message in response to the unbinding message to the second connection management module.

The message in response to the unbinding message indicates the second QoS management module to delete the second port to which the second transmission channel is mapped.

S309A: The second connection management module sends a reconfiguration response to the first connection management module.

The reconfiguration response indicates that the second connection management module successfully unbinds the second port to which the second transmission channel is mapped.

In an embodiment, the reconfiguration response may include the identifier of the first transmission channel and an unbinding result.

S310A: The first connection management module unbinds the first port to which the first transmission channel is mapped.

S311A: The first connection management module sends an unbinding response to the first QoS management module.

The unbinding response indicates the first connection management module to unbind the first port to which the first transmission channel is mapped.

In this embodiment of this application, the first electronic device may interact with the second electronic device, and may unbind the port to which the created transmission channel is mapped, so that the port to which the transmission channel is mapped can be reconfigured, flexibility is high, and the solution may be applied to a plurality of application scenarios. In addition, in this embodiment of this application, one piece of reconfiguration request signaling may support simultaneous reconfiguration of a plurality of transmission channels. The signaling is simple, and does not need to be repeatedly sent for a plurality of times.

Second: reconfiguration of quality of service QoS of a transmission channel.

In this embodiment, for example, when a user uses the first electronic device (for example, a mobile phone) to transmit standard-definition video data (a first service) to the second electronic device (for example, a wireless headset) for video playing, the basic service layer in the first electronic device may allocate a transmission channel (for example, the first transmission channel) to the video data. When a video definition changes, for example, a standard-definition video changes to a high-definition video, the first connection management module may reconfigure QoS of the first transmission channel, to transmit data of the high-definition video through the created first transmission channel. This can improve utilization of the transmission channel and data transmission efficiency.

FIG. 4A and FIG. 4B are a schematic flowchart of another embodiment of the transmission channel reconfiguration method according to an embodiment of this application. As shown in FIG. 4A and FIG. 4B, the first connection management module may reconfigure the QoS of the first transmission channel. For details, refer to the following procedure.

S401: The first QoS management module performs QoS negotiation with the second QoS management module.

It should be understood that, when QoS of the first service changes, the basic application layer may send new QoS of the first service to the first QoS management module, to indicate that the QoS of the first service changes. In an embodiment, the QoS of the first service may include but is not limited to a bit rate, a delay, a sampling rate, a bit width, and the like. For example, if the video changes from a standard definition to a high definition, QoS of the video data changes from QoS of the standard-definition video to QoS of the high-definition video.

In response to the new QoS of the first service, the first QoS management module may perform QoS negotiation with the second QoS management module, to obtain QoS (new QoS) of the first transmission channel and QoS (new QoS) of the second transmission channel.

S402: The first QoS management module sends a QoS change message to the first connection management module.

The QoS change message indicates that the QoS of the first service changes, and the QoS change message includes the QoS (new QoS) of the first transmission channel and the QoS (new QoS) of the second transmission channel.

S403: The first connection management module determines, in response to the QoS change message, whether to reconfigure the QoS of the first transmission channel; and if determining to reconfigure the QoS of the first transmission channel, performs S404; or if determining not to reconfigure the QoS of the first transmission channel, performs S415.

In response to receiving the QoS change message, the first connection management module may detect, based on the QoS (new QoS) of the first transmission channel and an actual transmission capability of the first transmission channel, whether to reconfigure the QoS of the first transmission channel, create a new transmission channel, or remap the first port of the first service to another created transmission channel, to transmit the data of the first service. In this embodiment of this application, that the first connection management module creates a new transmission channel to transmit the data of the first service is not described in detail. For details about remapping, by the first connection management module, the first port of the first service to another created transmission channel, refer to related descriptions in the foregoing embodiments. The following mainly describes a process in which the first connection management module reconfigures the QoS of the first transmission channel.

In an embodiment, if determining not to reconfigure the QoS of the first transmission channel, the first connection management module may detect whether another transmission channel at the basic service layer of the first electronic device can be used to transmit the data of the first service. If the another transmission channel can be used to transmit the data of the first service, the first connection management module may map the first port of the first service to the another transmission channel. If there is no other transmission channel that can be used to transmit the data of the first service at the basic service layer of the first electronic device, the first connection management module may create a new transmission channel to transmit the data of the first service.

If the first connection management module determines that the first transmission channel has the transmission capability of transmitting the data of the first service after the QoS is reconfigured, the first connection management module determines to reconfigure the QoS of the first transmission channel.

S404: The first connection management module detects whether to send a first reconfiguration message to the access layer of the first electronic device; and if detecting that the first reconfiguration message needs to be sent to the access layer of the first electronic device, performs S405; or if detecting that the first reconfiguration message does not need to be sent to the access layer of the first electronic device, performs S408.

A first measurement management module may sense a link quality XQI capability of the access layer of the first electronic device, and the first connection management module may determine, based on the XQI capability of the access layer of the first electronic device and a real-time transmission status of a first logical channel to which the first transmission channel is mapped, whether to initiate QoS reconfiguration to the access layer of the first electronic device. If determining to initiate the QoS reconfiguration to the access layer of the first electronic device, the basic service layer of the first electronic device may send the first reconfiguration message to the access layer of the first electronic device.

The first reconfiguration message indicates the access layer of the first electronic device to perform XQI negotiation with the access layer of the second electronic device.

If determining not to initiate the QoS reconfiguration to the access layer of the first electronic device, the basic service layer of the first electronic device may not send the first reconfiguration message to the access layer of the first electronic device, but directly interacts with the second electronic device, to perform QoS reconfiguration on the transmission channel. In this case, refer to the descriptions of S408 to S414.

S405: The first connection management module sends the first reconfiguration message to the access layer of the first electronic device.

S406: The access layer of the first electronic device performs XQI negotiation with the access layer of the second electronic device.

The XQI negotiation is used to negotiate which XQI and which logical channel in the SLB (or SLE) are used by the first electronic device to transmit the data of the first service.

In an embodiment, the access layer of the first electronic device may send an XQI negotiation instruction (or a QoS negotiation instruction) to the access layer of the second electronic device, to negotiate the link quality (namely, the XQI) corresponding to the first transmission channel and an LCID used to transmit the data of the first service.

S407: The access layer of the first electronic device sends an XQI negotiation result to the first connection management module.

The XQI negotiation result may include the XQI, an identifier TCID of the first transmission channel, and an identifier LCID of the logical channel to which the first transmission channel is mapped. It should be understood that the XQI is a new XQI of the logical channel to which the first transmission channel is mapped, and a logical channel to which the second transmission channel is mapped is the same as the logical channel to which the first transmission channel is mapped. Therefore, the XQI included in the XQI negotiation result is also a new XQI of the logical channel to which the second transmission channel is mapped.

In an embodiment, the access layer of the first electronic device and the access layer of the second electronic device maintain a mapping relationship between the identifier of the logical channel to which the first transmission channel is mapped and an identifier of the logical channel to which the second transmission channel is mapped.
1. In an embodiment, when the data of the first service changes from standard-definition data to high-definition data, before and after the change of the QoS of the first service, the identifier of the first transmission channel and the LCID do not change, and the XQI changes.
2. In an embodiment, when the data of the first service changes from standard-definition data to high-definition data, before and after the change of the QoS of the first service, the identifier of the first transmission channel does not change, and the LCID changes.

The following first describes "the identifier of the first transmission channel and the LCID do not change, and the XQI changes". In this embodiment, as shown in FIG. 4B, after S407, the following steps may be included.

S408: The first connection management module sends a reconfiguration request to the second connection management module.

The first connection management module may send the reconfiguration request to the second connection management module through a control channel of the basic service layer of the first electronic device.

The reconfiguration request includes an identifier of the second transmission channel created at the basic service layer of the second electronic device and the QoS of the second transmission channel.

In this embodiment, a signaling structure of the reconfiguration request may be shown as follows:

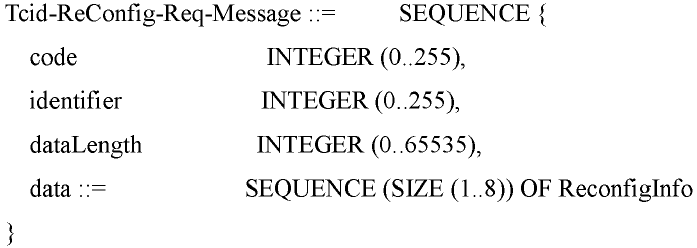

For Tcid-ReConfig-Req-Message, refer to the foregoing related descriptions.

Herein, ReconfigInfo of any transmission channel is used as an example. Content carried in ReconfigInfo is as follows:

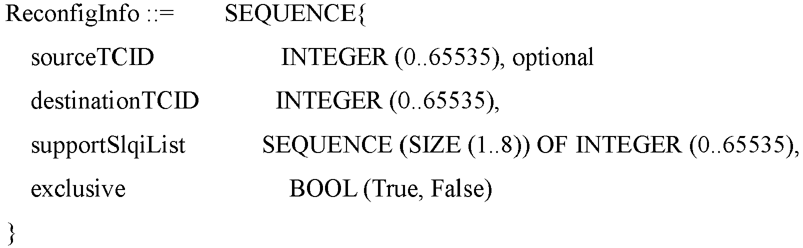

Herein, supportSlqiList is the QoS of the second transmission channel to which the QoS in the QoS change message is mapped, namely, an SLQI list, and supportSlqiList represents a QoS capability that needs to be supported by the second transmission channel. For example, supportSlqiList includes 1, 2, and 3, and the second transmission channel can support QoS capabilities corresponding to SLQI values (1, 2, and 3) in the following table.

It should be understood that, because one reconfiguration request may request reconfiguration of a plurality of transmission channels, the reconfiguration request may include at least one supportSlqiList to correspond to each transmission channel.

The SLQI list is shown in the following Table 2. As shown in Table 2, QoS capabilities supported by the second transmission channel vary with SLQI values.

**Table 2**

| SLQI value | Resource type | Default priority level | Packet delay level (ms) | Packet error rate | Default maximum data burst volume | Default averaging window (time period for calculating a GFBR and an MFBR) |
|---|---|---|---|---|---|---|
| 1 | GBR | 3 | 20 | 10⁻⁴ | N/A | 2000 ms |
| 2 | | 4 | 50 | 10⁻⁴ | N/A | 2000 ms |
| 3 | | 3 | 100 | 10⁻⁴ | N/A | 2000 ms |
| 55 | NON-GBR | 3 | 10 | 10⁻⁴ | N/A | N/A |
| 57 | | 5 | 25 | 10⁻¹ | N/A | N/A |
| 58 | | 4 | 100 | 10⁻² | N/A | N/A |
| 59 | | 6 | 500 | 10⁻¹ | N/A | N/A |
| 90 | Delay critical GBR | 3 | 10 | 10⁻⁴ | 2000 bytes | 2000 ms |
| 91 | | 2 | 3 | 10⁻⁵ | 2000 bytes | 2000 ms |
| ... | | ... | ... | ... | ... | ... |

As shown in Table 2, for example, when the video changes from the standard definition to the high definition, a corresponding SLQI value may change from 90 to 91.

S409: The second connection management module determines, in response to the reconfiguration request, whether to reconfigure the QoS of the second transmission channel; and if determining not to reconfigure the QoS of the second transmission channel, performs S410; or if determining to reconfigure the QoS of the second transmission channel, performs S411.

The second connection management module may determine, based on a device capability and a real-time transmission status of the second electronic device, whether to reconfigure the second transmission channel. For details, refer to related descriptions in S402.

In an embodiment, for example, the second connection management module may detect whether the QoS of the second transmission channel supports the QoS of the second transmission channel in the reconfiguration request. If the QoS of the second transmission channel supports the QoS of the second transmission channel in the reconfiguration request, it indicates that the QoS capability of the second transmission channel is strong, and the second transmission channel does not need to be reconfigured. If the QoS of the second transmission channel does not support the QoS of the second transmission channel in the reconfiguration request, it indicates that the QoS capability of the second transmission channel is weak, and the second transmission channel needs to be reconfigured.

S410: The second connection management module sends a first reconfiguration response to the first connection management module.

The first reconfiguration response represents that the second connection management module does not accept reconfiguration of the QoS of the transmission channel.

In an embodiment, the first reconfiguration response may include the identifier of the first transmission channel.

In an embodiment, the first reconfiguration response may include the identifier of the second transmission channel and the identifier of the first transmission channel.

In an embodiment, the first reconfiguration response may include the identifier of the second transmission channel, the identifier of the first transmission channel, and a reason why the second connection management module does not accept the reconfiguration of the QoS of the transmission channel.

For a signaling structure of the first reconfiguration response, refer to the foregoing related descriptions.

S411: The second connection management module reconfigures the QoS of the second transmission channel.

The basic service layer of the second electronic device may configure the QoS of the second transmission channel based on the QoS of the second transmission channel in the reconfiguration request.

S412: The second connection management module sends a second reconfiguration response to the first connection management module.

The second reconfiguration response indicates that the second connection management module completes the reconfiguration of the QoS of the second transmission channel. For a signaling structure of the second reconfiguration response, refer to the foregoing related descriptions.

In an embodiment, the second reconfiguration response may include the identifier of the first transmission channel.

S413: The first connection management module reconfigures the QoS of the first transmission channel.

The first connection management module may reconfigure the QoS of the first transmission channel based on the QoS in the second reconfiguration response, that is, configure the QoS of the first transmission channel to the new QoS.

S414: The first connection management module feeds back, to the first QoS management module, a message indicating that the QoS of the transmission channel is successfully reconfigured.

It should be understood that, that the first connection management module feeds back, to the first QoS management module, a message indicating that the QoS of the transmission channel is successfully reconfigured may be understood as that the first basic service layer completes reconfiguration of the first transmission channel. Correspondingly, the first basic service layer may transmit, through a reconfigured first transmission channel and the logical channel that has the new XQI and to which the first transmission channel is mapped, data of the first service whose QoS changes. Correspondingly, the second basic service layer may transmit, through a reconfigured second transmission channel and the logical channel that has the new XQI and to which the second transmission channel is mapped, the data of the first service whose QoS changes.

S415: The first connection management module creates a non-default service channel.

In this embodiment of this application, when a service is stopped or interrupted, the first connection management module may perform QoS reconfiguration on a transmission channel to which a port for transmitting data of the service is mapped, and interact with the second connection management module, so that the second connection management module may perform QoS reconfiguration on a transmission channel. Interaction is simple, and signaling is simple.

The following describes the case in which "the identifier of the first transmission channel does not change, and the LCID changes". An applicable scenario of the case is as follows: For example, the first connection management module and the second connection management module use the second logical channel of the SLB to transmit data, and after the video changes from the standard definition to the high definition, the first connection management module and the second connection management module use the first logical channel of the SLB to transmit data. In other words, this case is applicable to a scenario in which the sparklink access technology does not change, and a logical channel is changed. In an embodiment, the SLB may be referred to as a first access layer, and the SLE may be referred to as a second access layer; or the SLE may be referred to as a first access layer, and the SLB may be referred to as a second access layer.

It should be understood that the following embodiments are described by using an example in which the first transmission channel and the second transmission channel are originally mapped to the second logical channel, and the first transmission channel and the second transmission channel are newly mapped to the first logical channel. The first logical channel is different from the second logical channel. In an embodiment, the first logical channel and the second logical channel belong to a same access layer, for example, the SLB or the SLE.

In this embodiment, the signaling structure of the reconfiguration request in S408 may be replaced with the following:

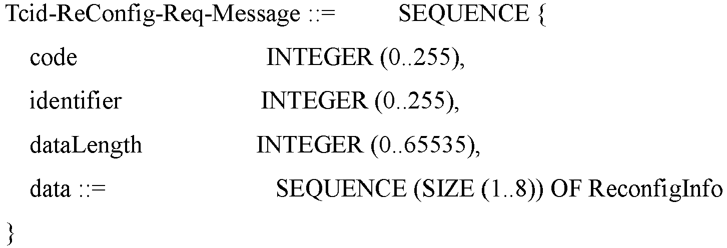

For Tcid-ReConfig-Req-Message, refer to the foregoing related descriptions.

Herein, ReconfigInfo of any transmission channel is used as an example. Content carried in ReconfigInfo is as follows:

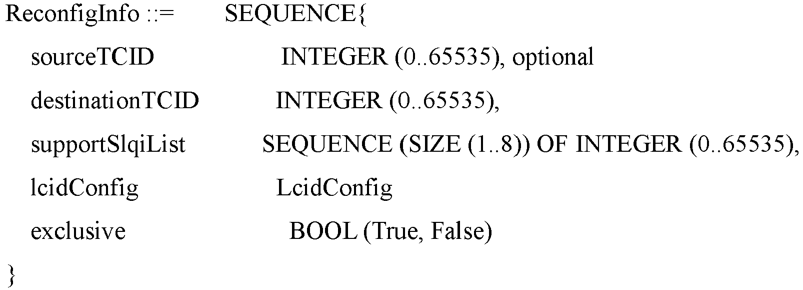

Herein, IcidConfig includes an identifier of at least one logical channel (for example, the second logical channel of the SLB) to which the second transmission channel is newly mapped (to be bound), and an identifier of at least one logical channel (for example, the first logical channel of the SLB) to which the second transmission channel is to be demapped. An example is as follows:

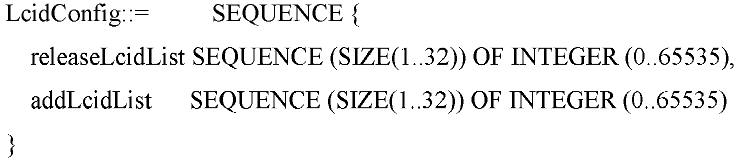

Herein, releaseLcidList represents the identifier of the at least one logical channel to which the second transmission channel is to be demapped, and addLcidList represents the identifier of the at least one logical channel to which the second transmission channel is newly mapped. In other words, the reconfiguration request includes the identifier of the second transmission channel, the identifier of the first logical channel to which the second transmission channel is newly mapped (to be bound), and the identifier of the second logical channel to which the second transmission channel is to be demapped.

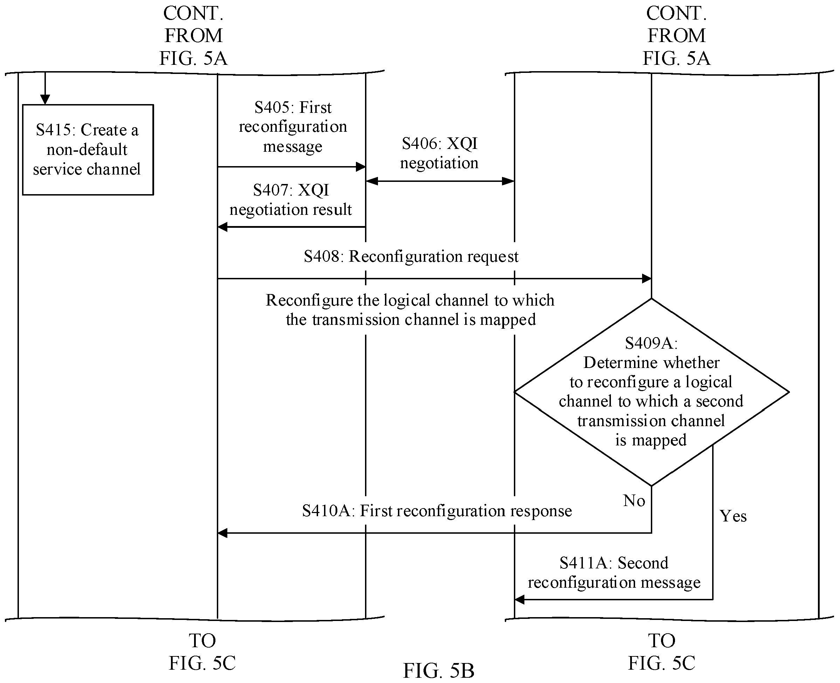

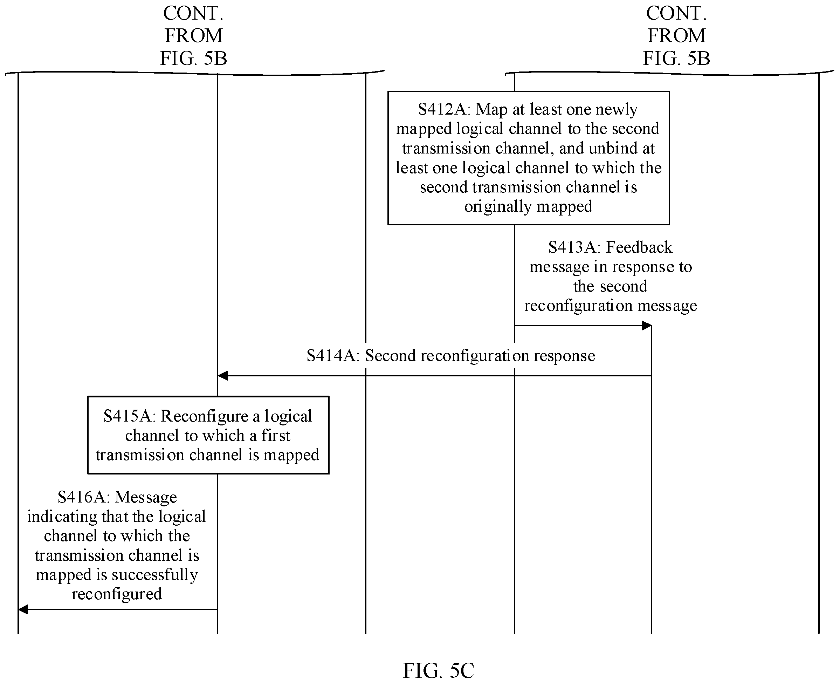

Correspondingly, as shown in FIG. 5B and FIG. 5C, S409 to S414 may be replaced with S409A to S416A.

S409A: The second connection management module determines, in response to the reconfiguration request, whether to reconfigure the logical channel to which the second transmission channel is mapped; and if determining not to reconfigure the logical channel to which the second transmission channel is mapped, performs S410A; or if determining to reconfigure the logical channel to which the second transmission channel is mapped, performs S411A.

In response to receiving the reconfiguration request, the second connection management module may determine whether to reconfigure the logical channel to which the transmission channel is mapped.

In an embodiment, if detecting that the identifier of the logical channel to which the second transmission channel is newly mapped in the reconfiguration request is incorrect, or the identifier of the second transmission channel is incorrect, the second connection management module may determine not to perform reconfiguration. For example, that the identifier of the logical channel to which the second transmission channel is newly mapped is incorrect may be but not limited to that the second electronic device does not have the logical channel. That the identifier of the second transmission channel is incorrect may be but not limited to that the second transmission channel is not created in the second electronic device.

In an embodiment, the second connection management module may determine, based on a capability of the logical channel to which the second transmission channel is mapped, whether to perform reconfiguration. For example, if there is no available resource on the logical channel to which the second transmission channel is mapped, it indicates that the logical channel to which the second transmission channel is mapped cannot support transmission of the data of the service, and the second connection management module determines that the logical channel to which the transmission channel is mapped needs to be reconfigured.

That the second connection management module determines whether to perform reconfiguration is used as an example for description. It should be understood that the second connection management module may alternatively perform determining according to another algorithm (for example, a preset rule). Details are not described in embodiments of this application.

S410A: The second connection management module sends a first reconfiguration response to the first connection management module.

The first reconfiguration response represents that the second connection management module does not accept reconfiguration of the logical channel to which the transmission channel is mapped.

In an embodiment, the first reconfiguration response may include the identifier of the first transmission channel. In an embodiment, the first reconfiguration response may include the identifier of the second transmission channel and the identifier of the first transmission channel. In an embodiment, the first reconfiguration response may include the identifier of the second transmission channel, the identifier of the first transmission channel, and a reason why the second connection management module does not accept the reconfiguration of the logical channel to which the transmission channel is mapped.

For a signaling structure of the first reconfiguration response, refer to the foregoing related descriptions.

S411A: The second connection management module sends a second reconfiguration message to the access layer of the second electronic device.

The second reconfiguration message indicates the access layer of the second electronic device to reconfigure a logical link. The second reconfiguration message may include the identifier of the at least one logical channel to which the second transmission channel is newly mapped, and the identifier of the at least one logical channel to which the second transmission channel is mapped and to be released (unbound).

For example, before the video is switched from the standard definition to the high definition, the logical channel to which the second transmission channel is originally mapped is the second logical channel LCID2, and after the video is switched from the standard definition to the high definition, the logical channel to which the second transmission channel is newly mapped is the first logical channel LCID1. In this case, the second reconfiguration message may include the identifier LCID1 of the logical channel to which the second transmission channel is newly mapped and the identifier LCID2 of the logical channel from which the second transmission channel is to be unbound.

S412A: The access layer of the second electronic device maps the at least one newly mapped logical channel to the second transmission channel, and unbinds the at least one logical channel to which the second transmission channel is originally mapped.

The access layer of the second electronic device may map, based on the second reconfiguration message, the at least one newly mapped logical channel to the second transmission channel, and unbind the at least one logical channel to which the second transmission channel is originally mapped. For example, the access layer of the second electronic device may map the logical channel LCID1 to the second transmission channel, and unbind the logical channel LCID2 to which the second transmission channel is originally mapped.

S413A: The access layer of the second electronic device sends a feedback message in response to the second reconfiguration message to the second connection management module.

The feedback message in response to the second reconfiguration message indicates that the access layer of the second electronic device completes reconfiguration of the logical channel to which the second transmission channel is mapped.

S414A: The second connection management module sends a second reconfiguration response to the first connection management module.

The second reconfiguration response indicates that the second connection management module completes the reconfiguration of the logical channel to which the second transmission channel is mapped. For a signaling structure of the second reconfiguration response, refer to the foregoing related descriptions.

S415A: The first connection management module reconfigures the logical channel to which the first transmission channel is mapped.

The first connection management module may map, based on a negotiation result, the logical channel to which the first transmission channel is newly mapped to the first transmission channel, and unbind the logical transmission channel to which the first transmission channel is originally mapped.

S416A: The first connection management module feeds back, to the first QoS management module, a message indicating that the logical channel to which the transmission channel is mapped is successfully reconfigured.

Because this embodiment of this application relates to a change of a logical channel, this embodiment of this application is a branch of "detecting that the first reconfiguration message needs to be sent to the access layer of the first electronic device" in S404. Therefore, FIG. 5A to FIG. 5C do not show another branch of "detecting that the first reconfiguration message does not need to be sent to the access layer of the first electronic device".

In S411A, an example in which the second reconfiguration message includes the identifier of the at least one logical channel to which the second transmission channel is newly mapped and the identifier of the at least one logical channel to which the second transmission channel is mapped and to be released (unbound) is used for description. In other words, in S411A and S412A, the access layer of the second electronic device may simultaneously perform binding (adding) and unbinding (deletion or release) operations on the logical channel to which the second transmission channel is mapped.

In an embodiment, the first connection management module may send the reconfiguration request in two times. One reconfiguration request includes the identifier of the logical channel to which the second transmission channel is newly mapped, and one reconfiguration request includes the identifier of the logical channel to which the second transmission channel is to be demapped, so that the basic service layer of the second electronic device may separately bind the logical channel to which the second transmission channel is mapped and unbind the logical channel to which the second transmission channel is mapped. For details, refer to related descriptions in FIG. 7A to FIG. 7D.

In this embodiment, after the first connection management module completes reconfiguration of the first transmission channel, the first basic service layer may transmit, through the reconfigured first transmission channel and the first logical channel to which the first transmission channel is newly mapped, the data of the first service whose QoS changes. Correspondingly, the second basic service layer may transmit, through the reconfigured second transmission channel and the second logical channel to which the second transmission channel is newly mapped, the data of the first service whose QoS changes.

In this embodiment of this application, the first electronic device and the second electronic device may interact with each other, to implement reconfiguration of the logical channels to which the transmission channels in the first electronic device and the second electronic device are mapped.

In the foregoing embodiments, the first QoS management module may perform QoS negotiation with the second QoS management module, to obtain the new QoS of the first transmission channel and the new QoS of the second transmission channel. The first QoS management module may synchronize the QoS of the first transmission channel to the first connection management module. The first connection management module may determine, based on the new QoS of the first transmission channel, a current transmission status of the first transmission channel, and the transmission capability of the access layer in the first electronic device, whether to switch an access technology, for example, switch the logical channel from the SLB (or the SLE) to the SLE (or the SLB). An example in which the first connection management module determines to switch the logical channel from the second logical channel (in an embodiment, the second logical channel may be referred to as the logical channel to which the first transmission channel at the second access layer is originally mapped) at the second access layer (for example, the SLB) to a third logical channel (in an embodiment, the third logical channel may be referred to as the first logical channel) at the first access layer (for example, the SLE) is used for description below.

The following describes a case in which "the logical channel is switched from the SLB (or the SLE) to the SLE (or the SLB)". As shown in FIG. 6A to FIG. 6C, an example in which the logical channel is switched from the SLB to the SLE is used for description. After S403, S407C to S409C may be performed, to switch the logical channel from the SLB to the SLE. It should be understood that S401 to S403 are not shown in FIG. 6A to FIG. 6C.

S407C: The first connection management module sends a logical link request to a first SLE module.

The logical link request indicates the first SLE module to establish an SLE logical link. It should be understood that S407C occurs when "the logical channel is switched from the SLB (or the SLE) to the SLE (or the SLB), and no SLB logical link is established between the first electronic device and the second electronic device".

In an embodiment, the logical link request includes the identifier of the first transmission channel.

S408C: The first SLE module negotiates with a second SLE module, to allocate the first logical channel (or the third logical channel) in the SLE logical link to the first transmission channel.

In an embodiment, the first logical channel that is in the SLE logical link and that is allocated to the first transmission channel may be all or some resources of the first logical channel.

S409C: The first SLE module feeds back a logical link configuration complete message to the first connection management module.

The logical link configuration complete message may include the identifier of the first logical channel in the SLE logical link and the identifier of the first transmission channel.

It should be understood that the following steps may be further performed after S409C.

S408: The first connection management module sends a reconfiguration request to the second connection management module.

The reconfiguration request includes the identifier of the second transmission channel, an identifier of at least one logical channel (for example, the second logical channel) in the SLB to which the second transmission channel is mapped and to be released (unbound), and an identifier of at least one logical channel (for example, the first logical channel) in the SLE to which the second transmission channel is newly mapped (to be bound).

S408C1: The second connection management module determines, in response to the reconfiguration request, whether to reconfigure the logical channel to which the second transmission channel is mapped; and if determining not to reconfigure the logical channel to which the second transmission channel is mapped, performs S409C1; or if determining to reconfigure the logical channel to which the second transmission channel is mapped, performs S410C.

In response to receiving the reconfiguration request, the second connection management module may determine whether to reconfigure the logical channel to which the transmission channel is mapped.

In an embodiment, if detecting that the identifier of the logical channel in the SLE to which the second transmission channel is newly mapped in the reconfiguration request is incorrect, or the identifier of the second transmission channel is incorrect, or the identifier of the logical channel in the SLB to which the second transmission channel is mapped and to be released is incorrect, the second connection management module may determine not to perform reconfiguration. For an understanding of "incorrect", refer to related descriptions in the foregoing embodiments.

That the second connection management module determines whether to perform reconfiguration is used as an example for description. It should be understood that the basic service layer of the second electronic device may alternatively perform determining according to another algorithm (for example, a preset rule). Details are not described in embodiments of this application.

S409C1: The second connection management module sends a first reconfiguration response to the first connection management module.

The first reconfiguration response represents that the second connection management module does not accept reconfiguration of the logical channel to which the transmission channel is mapped.

In an embodiment, the first reconfiguration response may include the identifier of the first transmission channel. In an embodiment, the first reconfiguration response may include the identifier of the second transmission channel and the identifier of the first transmission channel. In an embodiment, the first reconfiguration response may include the identifier of the second transmission channel, the identifier of the first transmission channel, and a reason why the second connection management module does not accept the reconfiguration of the logical channel to which the transmission channel is mapped.

For a signaling structure of the first reconfiguration response, refer to the foregoing related descriptions.

S410C: The second connection management module reconfigures the logical channel to which the second transmission channel is mapped.

The basic service layer of the second electronic device may map the at least one newly mapped logical channel in the SLE to the second transmission channel, and unbind the at least one logical channel in the SLB to which the second transmission channel is originally mapped.

S411C: The second connection management module sends a second reconfiguration response to the first connection management module.

S412C: The first connection management module reconfigures the logical channel to which the first transmission channel is mapped.

The first connection management module may map, based on a negotiation result, the logical channel in the SLE to which the first transmission channel is newly mapped to the first transmission channel, and unbind the logical channel in the SLB to which the first transmission channel is originally mapped.

In an embodiment, that the first connection management module unbinds the logical channel in the SLB to which the first transmission channel is originally mapped may include that the first connection management module sends, to the first SLB module, a request for unbinding the first transmission channel from the logical transmission channel in the SLB. In response to receiving the request for unbinding the first transmission channel from the logical transmission channel in the SLB, the first SLB module may interact and negotiate with the second SLB module, to release a logical channel resource corresponding to the first transmission channel in the SLB. In an embodiment, the logical channel resource corresponding to the first transmission channel in the SLB may be all or some resources of the second logical channel to which the first transmission channel is originally mapped in the SLB. It should be noted that whether to release all or some resources of the second logical channel depends on whether the first transmission channel originally corresponds all or some resources of the second logical channel. For example, if the first transmission channel originally corresponds to some resources of the second logical channel, the first SLB module may negotiate with the second SLB module to release some resources corresponding to the first transmission channel in the second logical channel.

S413C: The first connection management module feeds back, to the first QoS management module, a message indicating that the logical channel to which the transmission channel is mapped is successfully reconfigured.

In an embodiment, the first connection management module may send the reconfiguration request in two times. One reconfiguration request includes the identifier of the logical channel in the SLE to which the second transmission channel is newly mapped, and one reconfiguration request includes the identifier of the logical channel in the SLB from which the second transmission channel is to be unbound (or demapped), so that the second connection management module may separately add the logical channel in the SLE to which the second transmission channel is mapped and unbind the logical channel in the SLB to which the second transmission channel is mapped.

As shown in FIG. 7A to FIG. 7D, S408, S408C1, S409C1, S410C, and S411C may be replaced with S407B to S415B.

S407B: The first connection management module sends a reconfiguration request 1 to the second connection management module.

The reconfiguration request 1 includes the identifier of the second transmission channel and an identifier of at least one logical channel in the SLE to which the second transmission channel is newly mapped.

S408B: The second connection management module determines, in response to the reconfiguration request 1, whether to reconfigure the logical channel to which the second transmission channel is mapped; and if determining not to reconfigure the logical channel to which the second transmission channel is mapped, performs S409B; or if determining to reconfigure the logical channel to which the second transmission channel is mapped, performs S410B.

For S408B, refer to related descriptions in S408C1.

S409B: The second connection management module sends a first reconfiguration response to the first connection management module.

For the first reconfiguration response, refer to related descriptions in S409C1.

S410B: The second connection management module maps the at least one newly mapped logical channel in the SLE to the second transmission channel.

S411B: The second connection management module sends a second reconfiguration response 1 to the first connection management module.

S412B: The first connection management module sends a reconfiguration request 2 to the second connection management module.

The reconfiguration request 2 includes the identifier of the second transmission channel and an identifier of at least one logical channel in the SLB from which the second transmission channel is to be unbound.

S413B: The second connection management module determines, in response to the reconfiguration request 2, whether to reconfigure the logical channel to which the second transmission channel is mapped; and if determining not to reconfigure the logical channel to which the second transmission channel is mapped, performs S409B; or if determining to reconfigure the logical channel to which the second transmission channel is mapped, performs S414B.

For S413B, refer to related descriptions in S408C1.

S414B: The second connection management module unbinds the logical transmission channel in the SLB to which the second transmission channel is originally mapped.

S415B: The second connection management module sends a second reconfiguration response 2 to the first connection management module.

In this way, in this embodiment of this application, the second connection management module may separately add the logical channel in the SLE to which the second transmission channel is mapped, and unbind the logical channel in the SLB to which the second transmission channel is mapped.

In this embodiment of this application, when QoS of a service changes, the first electronic device may transmit data of the service in a manner of reconfiguring the QoS of the first transmission channel, or a manner of changing the logical channel to which the first transmission channel is mapped, or an access change manner (switching between the SLB and the SLE). Various manners can be used to adapt to a plurality of scenarios, and applicability is high.

In the foregoing embodiment, when the first electronic device newly executes the second service, the first connection management module may reconfigure the port to which the first transmission channel is mapped. In this embodiment, for example, the first port is mapped to the created first transmission channel. Correspondingly, because the first transmission channel is used to transmit more services, the QoS of the first transmission channel also needs to be changed accordingly. In this case, "first" and "second" may be combined.

In an embodiment, as shown FIG. 8, the first electronic device and the second electronic device may simultaneously reconfigure a port to which a transmission channel is mapped and QoS of the transmission channel. A specific process may include the following steps.

S801: The first QoS management module applies to the first connection management module for a transmission channel.

S802: The first connection management module determines whether to create a non-default service channel; and if determining not to create a non-default service channel, performs S803; or if determining to create a non-default service channel, performs S313.

S803: The first connection management module sends a reconfiguration request to the second connection management module.

Different from S303, the reconfiguration request in S803 indicates the second connection management module to reconfigure the port to which the second transmission channel is mapped and the QoS of the second transmission channel.

In an embodiment, the reconfiguration request includes the identifier of the second port, the identifier of the second transmission channel, and the new QoS of the second transmission channel.

For example, a signaling structure of the reconfiguration request may be shown as follows:

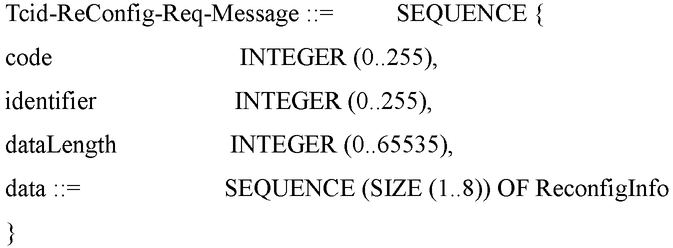

For Tcid-ReConfig-Req-Message, refer to the foregoing related descriptions.

Herein, ReconfigInfo of any transmission channel is used as an example. Content carried in ReconfigInfo is as follows, where for details, refer to related descriptions in the foregoing embodiments:

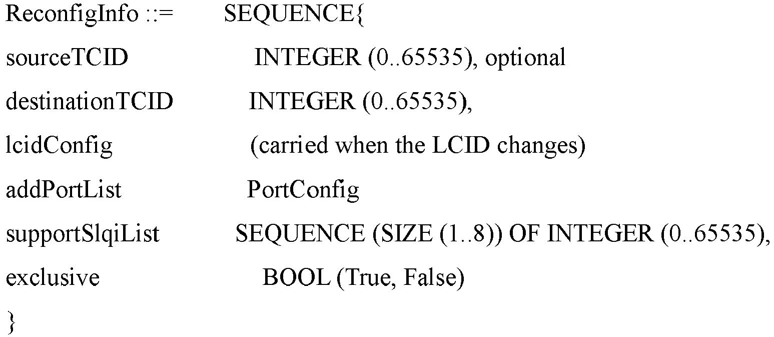

After S803, the second connection management module may reconfigure the second port to which the second transmission channel is mapped, and reconfigure the QoS of the second transmission channel, and the first connection management module may reconfigure the first port to which the second transmission channel is mapped, and reconfigure the QoS of the first transmission channel. In other words, after S803, S304 to S312 and S409 to S414 (that is, related steps in FIG. 6A to FIG. 6C and FIG. 7A to FIG. 7D may be replaced with) may be performed. For details, refer to related descriptions in the foregoing embodiments.

In this embodiment, in an embodiment, the responses in S310 and S412 may be combined into one message, and the second reconfiguration response indicates that the basic service layer of the second electronic device successfully completes reconfiguration of the port to which the second transmission channel is mapped and the QoS of the second transmission channel. The messages in S312 and S414 may be combined into one message. For example, the first connection management module feeds back, to the first QoS management module, a message indicating that the transmission channel is successfully reconfigured, to indicate that the first connection management module successfully completes reconfiguration of the port to which the first transmission channel is mapped and the QoS of the first transmission channel.

It should be understood that, in this embodiment, for the embodiment combining "first" and "second", the request signaling and the response signaling may be combined into one piece of signaling, to simplify signaling setting. It should be understood that S304 to S312, S313, and S409 to S414 are not shown in FIG. 8. For details, refer to related descriptions in the foregoing embodiments.

In an embodiment, the first electronic device in the foregoing embodiments includes the first basic application layer, the first basic service layer, and the access layer, and the second electronic device includes the second basic application layer, the second basic service layer, and the access layer. The first basic service layer includes the first QoS management module and the first connection management module, and the second basic service layer includes the second QoS management module and the second connection management module. The access layer of the first electronic device and the access layer of the second electronic device each include the first access layer and the second access layer, and the first access layer and the second access layer have different data transmission capabilities. For example, the first access layer is the SLB or the SLE, the second access layer is the SLE or the SLB, and the first access layer is different from the second access layer.

For the first basic service layer and the second basic service layer, as shown in FIG. 9, the transmission channel reconfiguration method in the foregoing embodiments may include the following steps.

S901: The first basic service layer sends a reconfiguration request to the second basic service layer in response to determining to reconfigure a first transmission channel, where the reconfiguration request indicates to reconfigure a second transmission channel.

It should be understood that in this embodiment of this application, an example in which the first basic service layer is used as an entity for executing the method to replace the "first QoS management module and the first connection management module" in the foregoing embodiments, and the second basic service layer is used as an entity for executing the method to replace the "second QoS management module and the second connection management module" in the foregoing embodiments is used for description.

Cases in which the first basic service layer responds to the determining to reconfigure the first transmission channel may include:
1. In a process of transmitting data of a first service, a new second service is initiated, and data of the second service needs to be transmitted. Correspondingly, the reconfiguration request is used to reconfigure a port to which the transmission channel is mapped.
2. Data transmission of a service is stopped. Correspondingly, the reconfiguration request is used to reconfigure a port to which the transmission channel is mapped.
3. QoS of a service changes. Correspondingly, the reconfiguration request is used to reconfigure QoS of the transmission channel or a logical channel to which the transmission channel is mapped.

For details, refer to related descriptions in the foregoing embodiments.

S902: The first basic service layer receives a reconfiguration response from the second basic service layer, where the reconfiguration response indicates that the second basic service layer completes reconfiguration of the second transmission channel.

S903: The first basic service layer reconfigures the first transmission channel.

For the reconfiguration response, refer to the related descriptions of the second reconfiguration response in the foregoing embodiments. For a process in which the first basic service layer and the second basic service layer reconfigure the transmission channel, refer to related descriptions in the foregoing embodiments.

For implementations and technical effects in embodiments of this application, refer to related descriptions in the foregoing embodiments. Details are not described herein again.

In an embodiment, an embodiment of this application provides a transmission channel reconfiguration apparatus. The transmission channel reconfiguration apparatus may be the first electronic device or a chip in the first electronic device in the foregoing embodiments. The transmission channel reconfiguration apparatus may include a first basic application layer, a first basic service layer, and an access layer. The first basic service layer includes a first QoS management module and a first connection management module, and the access layer includes a first access layer and a second access layer. For layers included in the transmission channel reconfiguration apparatus and functions of the modules, refer to related descriptions in the foregoing embodiments. Details are not described herein again.

In an embodiment, an embodiment of this application provides another transmission channel reconfiguration apparatus. The transmission channel reconfiguration apparatus may be the second electronic device or a chip in the second electronic device in the foregoing embodiments. The transmission channel reconfiguration apparatus may include a second basic application layer, a second basic service layer, and an access layer. The second basic service layer includes a second QoS management module and a second connection management module, and the access layer includes a first access layer and a second access layer. For layers included in the transmission channel reconfiguration apparatus and functions of the modules, refer to related descriptions in the foregoing embodiments. Details are not described herein again.

In an embodiment, an embodiment of this application further provides an electronic device. The electronic device may be the first electronic device or the second electronic device in the foregoing embodiments. As shown in FIG. 10, the electronic device may include a processor 1001 (for example, the host CPU in the foregoing embodiments) and a memory 1002. The memory 1002 may include a high-speed random access memory (random access memory, RAM), and may further include a non-volatile memory (non-volatile memory, NVM), for example, at least one magnetic disk memory. The memory 1002 may store various instructions, to be used by the processor 1001 to complete various processing functions and implement method steps of this application. For details, refer to related descriptions in the foregoing embodiments.

Optionally, the electronic device in this application may further include a power supply 1003 and a communication bus 1004. In this embodiment of this application, the memory 1002 is configured to store computer-executable program code. The program code includes instructions. When the processor 1001 executes the instructions, the instructions enable the processor 1001 of the electronic device to perform the actions in the foregoing method embodiments. Implementation principles and technical effects thereof are similar. Details are not described herein.

It should be noted that the modules or components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of invoking program code by a processing element, the processing element may be a general-purpose processor, for example, a central processing unit (central processing unit, CPU) or another processor that can invoke the program code, for example, a controller. For another example, the modules may be integrated and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk (Solid State Disk, SSD)), or the like.

The term "a plurality of in this specification refers to two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that, in descriptions of this application, terms such as "first" and "second" are merely used for distinction and description, cannot be understood as an indication or implication of relative importance, and cannot be understood as an indication or implication of a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A transmission channel reconfiguration method, applied to a first electronic device, wherein both the first electronic device and a second electronic device support a sparklink alliance protocol, the first electronic device comprises a first basic service layer, the second electronic device comprises a second basic service layer, a first transmission channel has been created at the first basic service layer, a second transmission channel has been created at the second basic service layer, the first transmission channel and the second transmission channel are used to transmit data of a first service, and the method comprises:
sending, by the first basic service layer, a reconfiguration request to the second basic service layer in response to determining to reconfigure the first transmission channel, wherein the reconfiguration request indicates to reconfigure the second transmission channel;
receiving, by the first basic service layer, a reconfiguration response from the second basic service layer, wherein the reconfiguration response indicates that the second basic service layer completes reconfiguration of the second transmission channel; and
reconfiguring, by the first basic service layer, the first transmission channel.

2. The method according to claim 1, wherein before the sending a reconfiguration request to the second basic service layer, the method further comprises:
determining, by the first basic service layer, whether to reconfigure the first transmission channel.

3. The method according to claim 2, wherein the determining, by the first basic service layer, whether to reconfigure the first transmission channel comprises:
in a process of transmitting the data of the first service through the first transmission channel, in response to determining to transmit data of a second service, determining, by the first basic service layer, whether to reconfigure the first transmission channel.

4. The method according to claim 3, wherein the first electronic device comprises a first basic application layer, and the second electronic device comprises a second basic application layer; and
before the determining whether to reconfigure the first transmission channel, the method further comprises:
performing, by the first basic application layer, port negotiation with the second basic application layer, to determine a first port of the first electronic device and a second port of the second electronic device that are used to transmit the data of the second service.

5. The method according to claim 4, wherein the reconfiguration request indicates to reconfigure a port to which the second transmission channel is mapped, and the reconfiguration request comprises an identifier of the second transmission channel and an identifier of the second port.

6. The method according to claim 4 or 5, wherein the reconfiguring, by the first basic service layer, the first transmission channel comprises:
mapping, by the first basic service layer, the first port to the first transmission channel.

7. The method according to any one of claims 3 to 6, wherein after the reconfiguring, by the first basic service layer, the first transmission channel, the method further comprises:
transmitting, by the first basic service layer, the data of the first service and the data of the second service through a reconfigured first transmission channel.

8. The method according to claim 2, wherein the determining, by the first basic service layer, whether to reconfigure the first transmission channel comprises:
in response to a change of quality of service QoS of the first service, determining, by the first basic service layer, whether to reconfigure the first transmission channel.

9. The method according to claim 8, wherein before the first basic service layer determines to reconfigure the first transmission channel, the method further comprises:
performing, by the first basic service layer, QoS negotiation with the second basic service layer, to determine new QoS of the first transmission channel and new QoS of the second transmission channel.

10. The method according to claim 9, wherein the reconfiguration request indicates to reconfigure QoS of the second transmission channel, and the reconfiguration request comprises an identifier of the second transmission channel and the new QoS of the second transmission channel.

11. The method according to claim 10, wherein the reconfiguring, by the first basic service layer, the first transmission channel comprises:
setting, by the first basic service layer, QoS of the first transmission channel to the new QoS of the first transmission channel.

12. The method according to any one of claims 9 to 11, wherein after the reconfiguring, by the first basic service layer, the first transmission channel, the method further comprises:
transmitting, by the first basic service layer through a reconfigured first transmission channel, the data of the first service whose QoS changes.

13. The method according to any one of claims 9 to 12, wherein the first electronic device and the second electronic device each comprise an access layer; and after the performing, by the first basic service layer, QoS negotiation with the second basic service layer, the method further comprises:
detecting, by the first basic service layer, whether the access layer of the first electronic device performs link quality XQI reconfiguration;
if the access layer of the first electronic device performs link quality XQI reconfiguration, sending, by the first basic service layer, a first configuration message to the access layer of the first electronic device;
in response to the first configuration message, performing, by the access layer of the first electronic device, XQI negotiation with the access layer of the second electronic device to obtain an XQI negotiation result; and
sending, by the access layer of the first electronic device, the XQI negotiation result to the first basic service layer.

14. The method according to claim 13, wherein a logical channel to which the second transmission channel is mapped is the same as a logical channel to which the first transmission channel is mapped, and the XQI negotiation result comprises a new XQI of the logical channel to which the first transmission channel is mapped.

15. The method according to claim 14, wherein after the reconfiguring, by the first basic service layer, the first transmission channel, the method further comprises:
transmitting, by the first basic service layer through the reconfigured first transmission channel and the logical channel that has the new XQI and to which the first transmission channel is mapped, the data of the first service whose QoS changes.

16. The method according to claim 13, wherein a logical channel to which the second transmission channel is mapped is the same as a logical channel to which the first transmission channel is mapped, the XQI negotiation result comprises a new first logical channel to which the first transmission channel is mapped, the first transmission channel is originally mapped to a second logical channel, and the first logical channel is different from the second logical channel.

17. The method according to claim 16, wherein the access layer of the first electronic device and the access layer of the second electronic device each comprise a first access layer and a second access layer, the first access layer and the second access layer have different data transmission capabilities, and the first logical channel and the second logical channel belong to a same access layer.

18. The method according to claim 17, wherein the reconfiguration request indicates to reconfigure the logical channel to which the second transmission channel is mapped, and the reconfiguration request comprises an identifier of the second transmission channel, an identifier of the to-be-bound first logical channel, and an identifier of the to-be-unbound second logical channel.

19. The method according to claim 17 or 18, wherein the reconfiguring, by the first basic service layer, the first transmission channel comprises:
mapping, by the first basic service layer, the first logical channel to the first transmission channel, and unbinding the second logical channel to which the first transmission channel is originally mapped.

20. The method according to any one of claims 16 to 19, wherein after the reconfiguring, by the first basic service layer, the first transmission channel, the method further comprises:
transmitting, by the first basic service layer through the reconfigured first transmission channel and the first logical channel, the data of the first service whose QoS changes.

21. The method according to claim 9, wherein an access layer of the first electronic device and an access layer of the second electronic device each comprise a first access layer and a second access layer, the first access layer and the second access layer have different data transmission capabilities, and after the performing, by the first basic service layer, QoS negotiation with the second basic service layer, the method further comprises:
detecting, by the first basic service layer, whether to switch an access layer.

22. The method according to claim 21, wherein when the first basic service layer determines to switch from the second access layer to the first access layer, the method further comprises:
sending, by the first basic service layer, a logical link request to the first access layer of the first electronic device;
negotiating, by the first access layer of the first electronic device, with the first access layer of the second electronic device in response to the logical link request, to allocate a third logical channel at the first access layer to the first transmission channel; and
sending, by the first access layer of the first electronic device, a logical link configuration complete message to the first basic service layer.

23. The method according to claim 22, wherein a logical channel to which the second transmission channel is mapped is the same as a logical channel to which the first transmission channel is mapped, the reconfiguration request indicates to reconfigure the logical channel to which the second transmission channel is mapped, and the reconfiguration request comprises an identifier of the second transmission channel, an identifier of the to-be-bound third logical channel, and an identifier of a to-be-unbound logical channel that is at the second access layer and to which the second transmission channel is originally mapped; and
the reconfiguring, by the first basic service layer, the first transmission channel comprises:
mapping, by the first basic service layer, the third logical channel to the first transmission channel, and unbinding a logical channel that is at the second access layer and to which the first transmission channel is originally mapped.

24. The method according to claim 23, wherein the unbinding a logical channel that is at the second access layer and to which the first transmission channel is originally mapped comprises:
sending, by the first basic service layer to the second access layer of the first electronic device, a request for unbinding the first transmission channel from the logical channel at the second access layer;
negotiating, by the second access layer of the first electronic device, with the second access layer of the second electronic device, to release a logical channel resource that is at the second access layer and that corresponds to the first transmission channel; and
sending, by the second access layer of the first electronic device, to the first basic service layer, a response to unbinding the first transmission channel from the logical channel at the second access layer.

25. The method according to claim 2, wherein the determining, by the first basic service layer, whether to reconfigure the first transmission channel comprises:
in response to completion of data transmission of the first service, determining, by the first basic service layer, whether to reconfigure the first transmission channel.

26. The method according to claim 25, wherein the determining, by the first basic service layer, whether to reconfigure the first transmission channel comprises:
detecting, by the first basic service layer, whether the first transmission channel is further mapped to another port in addition to a third port, wherein the third port is used to transmit the data of the first service; and
if the first transmission channel is not mapped to another port in addition to the third port, unbinding, by the first basic service layer, the third port to which the first transmission channel is mapped; or
if the first transmission channel is mapped to another port in addition to the third port, determining, by the first basic service layer, to reconfigure the first transmission channel.

27. The method according to claim 26, wherein the reconfiguration request indicates to unbind a fourth port to which the second transmission channel is mapped, and there is a mapping relationship between the third port and the fourth port.

28. The method according to claim 27, wherein the reconfiguring, by the first basic service layer, the first transmission channel comprises:
unbinding, by the first basic service layer, the third port to which the first transmission channel is mapped.

29. The method according to any one of claims 1 to 28, wherein the reconfiguration response is a second reconfiguration response, and the second reconfiguration response comprises an identifier of the first transmission channel and a reconfiguration result of the second transmission channel.

30. The method according to claim 28, wherein after the sending a reconfiguration request to the second basic service layer, the method further comprises:
receiving, by the first basic service layer, a first reconfiguration response from the second basic service layer, wherein the first reconfiguration response indicates that the second basic service layer does not accept reconfiguration of the second transmission channel.

31. The method according to any one of claims 2 to 28, wherein the first basic service layer comprises a first QoS management module and a first connection management module;
before the determining, by the first basic service layer, whether to reconfigure the first transmission channel, the method further comprises:
sending, by the first QoS management module, information to the first connection management module, wherein the information indicates to apply a transmission channel for the second service, or the information indicates that the quality of service QoS of the first service changes; and
the determining, by the first basic service layer, whether to reconfigure the first transmission channel comprises:
determining, by the first connection management module, whether to reconfigure the first transmission channel.

32. A transmission channel reconfiguration method, applied to a second electronic device, wherein both the second electronic device and a first electronic device support a sparklink alliance protocol, the first electronic device comprises a first basic service layer, the second electronic device comprises a second basic service layer, a first transmission channel has been created at the first basic service layer, a second transmission channel has been created at the second basic service layer, the first transmission channel and the second transmission channel are used to transmit data of a first service, and the method comprises:
receiving, by the second basic service layer, a reconfiguration request from the first basic service layer, wherein the reconfiguration request indicates to reconfigure the second transmission channel;
if determining to reconfigure the second transmission channel, reconfiguring, by the second basic service layer, the second transmission channel based on the reconfiguration request; and
sending, by the second basic service layer, a reconfiguration response to the first basic service layer, wherein the reconfiguration response indicates that the second basic service layer completes reconfiguration of the second transmission channel.

33. The method according to claim 32, wherein before the second basic service layer determines to reconfigure the second transmission channel, the method further comprises:
determining, by the second basic service layer, whether to reconfigure the second transmission channel.

34. The method according to claim 32 or 33, wherein the first electronic device comprises a first basic application layer, the second electronic device comprises a second basic application layer, and before the receiving, by the second basic service layer, a reconfiguration request from the first basic service layer, the method further comprises:
performing, by the second basic application layer, port negotiation with the first basic application layer, to determine a first port of the first electronic device and a second port of the second electronic device that are used to transmit data of a second service.

35. The method according to claim 34, wherein the reconfiguration request indicates to reconfigure a port to which the second transmission channel is mapped, and the reconfiguration request comprises an identifier of the second transmission channel and an identifier of the second port.

36. The method according to claim 35, wherein the reconfiguring the second transmission channel comprises:
mapping, by the second basic service layer, the second port to the second transmission channel.

37. The method according to any one of claims 34 to 36, wherein after the reconfiguring the second transmission channel, the method further comprises:
transmitting, by the second basic service layer, the data of the first service and the data of the second service through a reconfigured second transmission channel.

38. The method according to claim 32 or 33, wherein before the receiving, by the second basic service layer, a reconfiguration request from the first basic service layer, the method further comprises:
performing, by the second basic service layer, quality of service QoS negotiation with the first basic service layer, to determine new QoS of the first transmission channel and new QoS of the second transmission channel.

39. The method according to claim 38, wherein the reconfiguration request indicates to reconfigure QoS of the second transmission channel, and the reconfiguration request comprises an identifier of the second transmission channel and the new QoS of the second transmission channel.

40. The method according to claim 38 or 39, wherein the reconfiguring the second transmission channel comprises:
setting, by the second basic service layer, the QoS of the second transmission channel to the new QoS of the second transmission channel.

41. The method according to any one of claims 38 to 40, wherein after the reconfiguring the second transmission channel, the method further comprises:
transmitting, by the second basic service layer through a reconfigured second transmission channel, the data of the first service whose QoS changes.

42. The method according to claim 38, wherein the first electronic device and the second electronic device each comprise an access layer; and after the performing, by the second basic service layer, quality of service QoS negotiation with the first basic service layer, the method further comprises:
performing, by the access layer of the second electronic device, link quality XQI negotiation with the access layer of the first electronic device to obtain an XQI negotiation result.

43. The method according to claim 42, wherein a logical channel to which the first transmission channel is mapped is the same as a logical channel to which the second transmission channel is mapped, and the XQI negotiation result comprises a new XQI of the logical channel to which the second transmission channel is mapped.

44. The method according to claim 43, after the reconfiguring the second transmission channel, the method further comprises:
transmitting, by the second basic service layer through the reconfigured second transmission channel and the logical channel that has the new XQI and to which the second transmission channel is mapped, the data of the first service whose QoS changes.

45. The method according to claim 42, wherein a logical channel to which the second transmission channel is mapped is the same as a logical channel to which the first transmission channel is mapped, the XQI negotiation result comprises a new first logical channel to which the second transmission channel is mapped, the second transmission channel is originally mapped to a second logical channel, and the first logical channel is different from the second logical channel.

46. The method according to claim 45, wherein the access layer of the first electronic device and the access layer of the second electronic device each comprise a first access layer and a second access layer, the first access layer and the second access layer have different data transmission capabilities, and the first logical channel and the second logical channel belong to a same access layer.

47. The method according to claim 46, wherein the reconfiguration request indicates to reconfigure the logical channel to which the second transmission channel is mapped, and the reconfiguration request comprises an identifier of the second transmission channel, an identifier of the to-be-bound first logical channel, and an identifier of the to-be-unbound second logical channel.

48. The method according to claim 46 or 47, wherein the reconfiguring the second transmission channel comprises:
mapping, by the second basic service layer, the first logical channel to the second transmission channel, and unbinding the second logical channel to which the second transmission channel is originally mapped.

49. The method according to any one of claims 45 to 48, wherein after the reconfiguring the second transmission channel, the method further comprises:
transmitting, by the second basic service layer through the reconfigured second transmission channel and the first logical channel, the data of the first service whose QoS changes.

50. The method according to claim 38, wherein an access layer of the first electronic device and an access layer of the second electronic device each comprise a first access layer and a second access layer, the first access layer and the second access layer have different data transmission capabilities, and after the performing, by the second basic service layer, quality of service QoS negotiation with the first basic service layer, the method further comprises:
when the first basic service layer determines to switch from the second access layer to the first access layer, negotiating, by the first access layer of the second electronic device, with the first access layer of the first electronic device, to allocate a third logical channel at the first access layer to the first transmission channel.

51. The method according to claim 50, wherein a logical channel to which the second transmission channel is mapped is the same as a logical channel to which the first transmission channel is mapped, the reconfiguration request indicates to reconfigure the logical channel to which the second transmission channel is mapped, and the reconfiguration request comprises an identifier of the second transmission channel, an identifier of the to-be-bound third logical channel, and an identifier of a to-be-unbound logical channel that is at the second access layer and to which the second transmission channel is originally mapped; and
the reconfiguring the second transmission channel comprises:
mapping, by the second basic service layer, the third logical channel to the second transmission channel, and unbinding the logical channel that is at the second access layer and to which the second transmission channel is originally mapped.

52. The method according to claim 51, wherein the unbinding the logical channel that is at the second access layer and to which the second transmission channel is originally mapped comprises:
negotiating, by the second access layer in the second electronic device, with the second access layer in the first electronic device, to release a logical channel resource that is at the second access layer and that corresponds to the second transmission channel.

53. The method according to claim 32 or 33, wherein the reconfiguration request indicates to unbind a fourth port to which the second transmission channel is mapped.

54. The method according to claim 53, wherein the reconfiguring the second transmission channel comprises:
unbinding, by the second basic service layer, the fourth port to which the second transmission channel is mapped.

55. The method according to any one of claims 32 to 53, wherein the reconfiguration response is a second reconfiguration response, and the second reconfiguration response comprises an identifier of the first transmission channel and a reconfiguration result of the second transmission channel.

56. The method according to claim 55, wherein the method further comprises:
if determining not to reconfigure the second transmission channel, sending, by the second basic service layer, a first reconfiguration response to the first basic service layer, wherein the first reconfiguration response indicates that the second basic service layer does not accept reconfiguration of the second transmission channel.

57. A transmission channel reconfiguration apparatus, wherein both a first electronic device and a second electronic device support a sparklink alliance protocol, the first electronic device has created a first transmission channel, the second electronic device has created a second transmission channel, the first transmission channel and the second transmission channel are used to transmit data of a first service, and the apparatus comprises:
a first connection management module, configured to:
send a reconfiguration request to a second connection management module in the second electronic device in response to determining to reconfigure the first transmission channel, wherein the reconfiguration request indicates to reconfigure the second transmission channel;
receive a reconfiguration response from the second connection management module, wherein the reconfiguration response indicates that the second connection management module completes reconfiguration of the second transmission channel; and
reconfigure the first transmission channel.

58. A transmission channel reconfiguration apparatus, wherein both a first electronic device and a second electronic device support a sparklink alliance protocol, the first electronic device has created a first transmission channel, the second electronic device has created a second transmission channel, the first transmission channel and the second transmission channel are used to transmit data of a first service, and the apparatus comprises:
a second connection management module, configured to:
receive a reconfiguration request from a first connection management module in the first electronic device, wherein the reconfiguration request indicates to reconfigure the second transmission channel;
if determining to reconfigure the second transmission channel, reconfigure the second transmission channel based on the reconfiguration request; and
send a reconfiguration response to the first connection management module, wherein the reconfiguration response indicates that the second connection management module completes reconfiguration of the second transmission channel.

59. An electronic device, comprising a processor and a memory, wherein
the memory stores computer-executable instructions; and
the processor executes the computer-executable instructions stored in the memory, so that the processor performs the method according to any one of claims 1 to 56.

60. A computer-readable storage medium, wherein the computer-readable storage medium stores a computer program or instructions, and when the computer program or the instructions are run, the method according to any one of claims 1 to 56 is implemented.

61. A computer program product, comprising a computer program or instructions, wherein when the computer program or the instructions are executed by a processor, the method according to any one of claims 1 to 56 is implemented.

62. A program product, wherein the program product comprises a computer program, the computer program is stored in a readable storage medium, at least one processor of a communication apparatus is able to read the computer program from the readable storage medium, and the at least one processor executes the computer program, so that the communication apparatus implements the method according to any one of claims 1 to 31 or the method according to any one of claims 32 to 56.
